(19) Europäisches Patentamt
European Patent Office
Office européen des brevets

(11) **EP 4 093 532 B1**

(12) **EUROPEAN PATENT SPECIFICATION**

(45) Date of publication and mention
of the grant of the patent:
**26.02.2025  Bulletin 2025/09**

(21) Application number: **21743911.6**

(22) Date of filing: **21.01.2021**

(51) International Patent Classification (IPC):
**B01D 53/22** (2006.01)       **B01D 61/24** (2006.01)
**B01D 61/28** (2006.01)       **B01D 61/36** (2006.01)
**B01D 61/38** (2006.01)       **B01D 63/10** (2006.01)
**B01D 63/08** (2006.01)       **B01D 67/00** (2006.01)
**B01D 69/06** (2006.01)

(52) Cooperative Patent Classification (CPC):
**B01D 61/368; B01D 61/362; B01D 63/084;
B01D 63/1031; B01D 63/107; B01D 67/0088;
B01D 69/06;** B01D 53/22; B01D 2256/10;
B01D 2256/245; B01D 2257/504; B01D 2311/13;
B01D 2313/08; B01D 2315/24; B01D 2319/06

(86) International application number:
**PCT/US2021/014261**

(87) International publication number:
**WO 2021/150648 (29.07.2021 Gazette 2021/30)**

(54) **COUNTERFLOW MEMBRANE MODULE**

GEGENSTROMMEMBRANMODUL

MODULE DE MEMBRANE À CONTRE-COURANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2020  US 202062963637 P
21.01.2020  US 202062963639 P
21.01.2020  US 202062963643 P**

(43) Date of publication of application:
**30.11.2022  Bulletin 2022/48**

(73) Proprietor: **Membrane Technology and Research,
Inc
Newark, California 94560 (US)**

(72) Inventors:
• **BAKER, Richard W.
Newark, California 94560 (US)**
• **WIJMANS, Johannes G.
Newark, California 94560 (US)**
• **MERKEL, Timothy C.
Newark, California 94560 (US)**
• **AMO, Karl D.
Newark, California 94560 (US)**

(74) Representative: **Boult Wade Tennant LLP
Salisbury Square House
8 Salisbury Square
London EC4Y 8AP (GB)**

(56) References cited:
WO-A1-2020/012018       CN-A- 108 043 228
JP-A- 2000 342 939       US-A- 5 034 126
US-A- 5 096 584          US-A- 5 580 452
US-A- 6 136 073          US-A1- 2014 230 649
US-B1- 8 496 825

## Description

FIELD OF INVENTION

The present invention relates to a counterflow membrane module, a method for making the same, and a method of using a counterflow membrane module. The counterflow membrane module is particularly useful for pervaporation and gas separation applications.

BACKGROUND

In the text that follows, the concentration of components used are molar concentrations unless otherwise stated. The term "major component" refers to the component that has the highest concentration in the feed fluid, while the term "minor component" refers to the component that has a lower concentration than the major component in the feed fluid. The "minor component" is enriched in the permeate fluid by the membrane separation processes and is the target component of the separation processes. The term "fluid" may refer to gas and/or liquid.

In a separation module, a feed fluid containing a major component and a minor component, the major component having a higher concentration than the minor component is separated across a membrane into a permeate fluid and a residue fluid. The residue fluid has a lower concentration of the minor component than the feed fluid and the permeate fluid has a higher concentration of the minor component than the feed fluid. In a cross-flow module, the permeate fluid is predominantly transverse, preferably perpendicular to the feed flow. In a counterflow module, the permeate fluid is predominantly in the opposite direction from the feed flow.

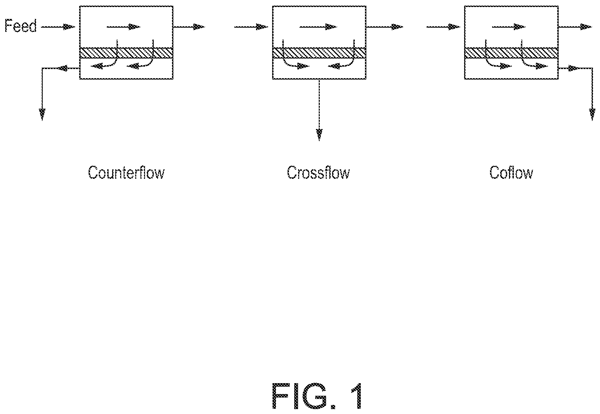

A known counterflow separation device is shown in Figure 1. In a counterflow separation devices, the flow of the feed is in a first direction (left to right in Figure 1) and the flow of permeate is in the opposite direction (right to left in Figure 1). The concentration of the most permeable components in the feed decreases as the feed flows along the membrane surface in the first direction (i.e. left to right). Consequently, the concentration of the most permeable components in the permeate also decreases along the first direction. The permeate fluid flowing along the second direction dilutes the permeate at all points along towards the inlet (right to left). For example, in Figure 1 the permeate is flowing continuously right to left and so dilutes the concentration of the most permeable component at all points left. This dilution increases the concentration difference of the most permeable component across the membrane and consequently increases the driving force for the separation across the membrane. This effect is known as sweep.

This increase in driving force improves efficiency such that a smaller membrane area can be used. However, counterflow modules are difficult to make. Therefore, crossflow modules, where the permeate fluid flows at right angles to the feed flow, are used in many, perhaps a majority, of gas separation and pervaporation applications. The issues concerning counterflow modules are discussed in many textbooks in this field, for example, chapters 3, 4, 8 and 9 of Baker, R.W., Membrane Technology and Applications, 3rd Edition, (2012), John Wiley and Sons.

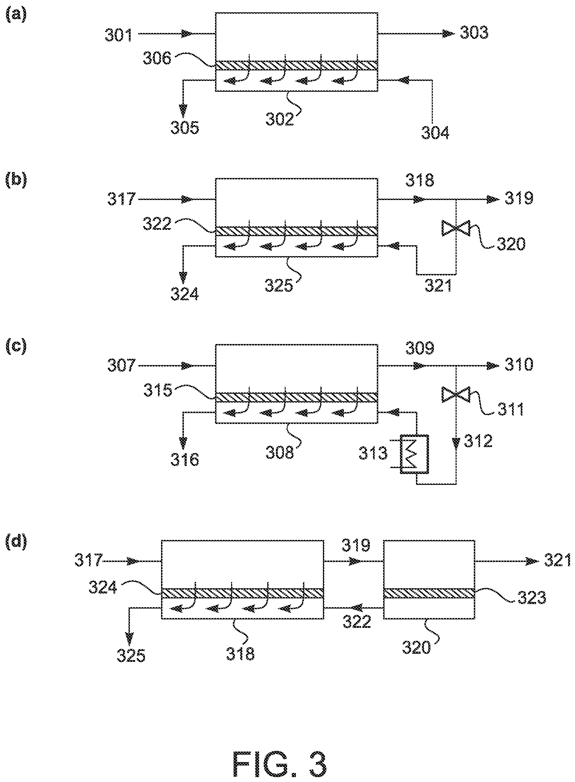

It is known to use external sweep to increase the driving force across the membrane and so improve efficiency for crossflow modules. External sweep uses a gas stream generated externally to the module that is injected into the permeate fluid proximal to the outlet to generate a sweep effect. Such systems are shown in Figure 3 and are described in further detail later in the application. As shown in Figure 3(b), the residue fluid may be expanded across a valve 320 before being introduced to the permeate fluid at the outlet end. For example, it is known to pass a portion of the treated residue fluid through a valve and introduce this to the permeate side of the module. However, such systems require additional piping and valves to control the sweep flow rate for reliable operation, which leads to increased costs. Furthermore, such modules would be employed in large numbers in an industrial plant thereby requiring many control units, the failure of any one leading to a large uncontrolled leak of gas from the residue to the permeate stream affecting the operation of the whole plant.

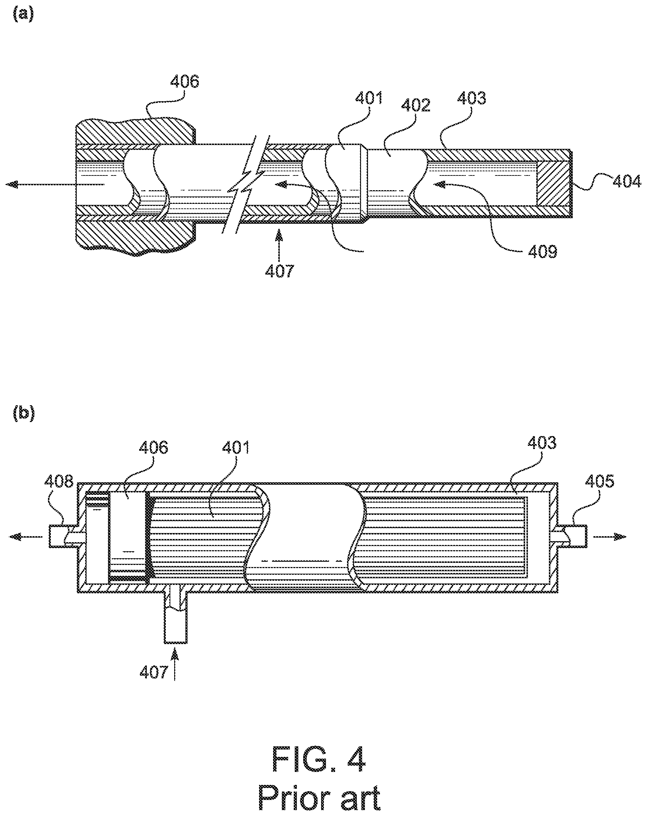

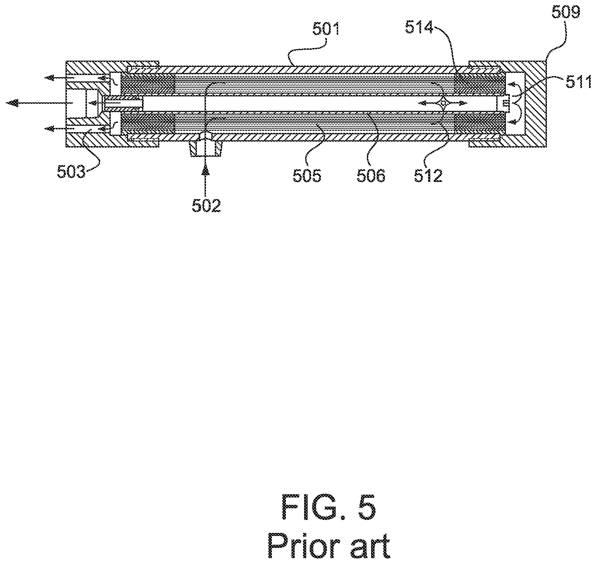

The devices shown in Figures 4 and 5 attempted to address the issues concerning modules where the sweep gas is generated externally by instead generating the sweep gas flow internally. The device shown in Figure 4 is a counterflow hollow fiber module device where the fiber is coated with a selective layer 401 except for a bare end portion 403. The bare end portion has a much higher permeance than the main portion of the fiber but no selectivity. Therefore, the feed fluid would permeate through the bare end and act as a flow of sweep gas 409 generated internally. The device shown in Figure 5 is also a counterflow hollow fiber module. The feed fluid 502 flows left to right in in the spaces between the hollow fibers 505. A residue pipe extends through the module and terminates before the right-hand end of the module 509. A portion of the feed fluid permeates the fiber membrane and travels inside the fiber in the opposite direction to the feed flow. The feed fluid that does not permeate the membrane is removed through holes in the residue collection pipe. The end of the residue collection pipe is sealed with a plug perforated by an orifice 511. A portion of the treated residue fluid leaks through this orifice and can then enter the open ends of the fibers 514 acting as a sweep gas.

The use of internal sweep has been limited to counterflow hollow fiber separation modules. Internal sweep has not been applied to separation modules comprising membrane sheets, such as plate-and-frame modules or spiral-wound modules due to construction and operation difficulties. Indeed, almost all of the spiral-wound and plate-and-frame modules in current use are crossflow instead of counterflow due to easier construction and operation. The present invention seeks to apply the advantages of internally generated sweep to devices comprising flat membrane sheets.

US5096584A describes a spiral-wound membrane module having a semi-permeable membrane which has a central high pressure permeate region flanked on opposite sides by two lower pressure edge portions. The edge portions facilitate the dispersion of and the collection of the feed fluid being treated and assist in obtaining a more uniform flow of the feed fluid through the high pressure region of the membrane. In one embodiment, the module has entrance and exit flow means for a countercurrent flow of a sweep fluid through the permeate. Preferably, the high pressure permeate region is a high density porous spacer flanked on two sides with low density porous spacers.

US8496825B1 describes spiral wound modules including membrane sheets with regions having different permeabilities. Said regions are arranged either axially or radially or both.

CN108043228A describes a reverse osmosis membrane (RO) with various different filtering performance subareas and a preparation method thereof. The reverse osmosis membrane is formed by a plurality of different filtering performance subareas which are laterally connected in sequence. The plurality of different filtering performance subareas can be formed by a plurality of polyamide separation layers with different filtering performances which are laterally connected in sequence to a base membrane of the reverse osmosis membrane.

SUMMARY

According to the invention there is provided a counterflow membrane module and a method for making the module as defined by the claims.

There is provided a counterflow membrane module configured to separate feed fluid comprising a minor component and a major component into permeate fluid and residue fluid according to claim 1.

Accordingly, in the present invention, the second part of the permeate fluid acts as a sweep fluid, diluting the concentration of the minor component in the permeate fluid closer to the first end. By diluting the concentration of the minor component in the permeate fluid, the concentration gradient across the membrane for the minor component is increased. The increase in concentration gradient leads to an increase in driving force for the separation of the feed fluid across the membrane into the permeate fluid and the residue fluid. The second part of the permeate fluid is also referred to in the specification as sweep gas and sweep flow.

The one or more membrane sheet(s) are flat i.e. planar.

The feed fluid flows along the major surface of the membrane in the first direction. The feed fluid is separated into the permeate fluid and the residue fluid. The residue fluid also flows along the same major surface of the membrane as the feed fluid in the first direction. The permeate fluid comprises the portion of the feed fluid that passes through the membrane and flows along the opposite major surface of the membrane from the feed fluid and the residue fluid. In the present application, the major surface of the membrane, along which the residue and feed fluid flows, is termed the first major surface and the major surface of the membrane, along which the permeate fluid flows, is termed the second major surface. The first major surface may also be considered to be the feed side of the membrane and the second major surface may be considered to be the permeate side of the membrane. The second major surface opposes the first major surface. In other words, the second major surface is separated from the first major surface by the thickness of the membrane sheet. In the present invention, at least a portion of the permeate fluid flows in the direction from the second end towards the first end (i.e. in a direction opposite from the first direction).

For each membrane sheet, the fluid path along the first major surface between the inlet and the outlet is fluidly sealed from the fluid path along the second major surface to the conduit such that fluid can only pass from the first major surface to the second major surface through the membrane sheet. The sealing prevents leaks that would cause mixing of the feed/residue fluid on the first major surface of the membrane sheet with permeate fluid on the second major surface of the membrane sheet. The seals also serve to separate the fluids going into and out of the module from the outside environment. The seal may be achieved by using adhesive, such as epoxy glue or equivalent sealing material, adhesive tape or heat sealing.

The one or more membrane sheet(s) extend between the first and second ends of the housing such that the first end of the one or more membrane sheet(s) is proximal to the first end of the housing and the second end of the one or more membrane sheet(s) is proximal to the second end of the housing. Preferably, the housing may be cylindrical in shape where the first direction defines a diameter of the housing and the first and second ends are diametrically opposed.

The first and second ends and the first and second sides of the one or more membranes sheet(s) form outer edges of the one or more membrane sheet(s). The first and second ends of the one or more membrane sheet(s) form the outer edges of the one or more membrane sheet(s) spaced apart along the first direction. The first and second sides of the one or more membranes sheet(s) form the outer edges of the one or more membrane sheet(s) spaced apart along the second direction.

The permeate section of the membrane sheet is a part of the second major surface of the membrane sheet typically aligned with openings/apertures in the conduit configured to received the permeate fluid. The permeate section is a part of the first portion of the membrane sheet. The permeate section typically extends in the first direction. Preferably, the permeate section extends along a portion of the outer edge formed by the first side. The permeate section may be a strip of the membrane sheet. Preferably, the permeate section extends along the first direction.

As discussed above, the conduit is configured to receive and output the permeate fluid. The conduit is typically fluidly connected to the second major surface of the one of more membrane sheet(s) where the second major surface is opposite from the first major surface. The conduit may be a first conduit of a plurality of conduits. The conduit is typically aligned with the permeate section. The conduit typically comprises openings/apertures to receive the permeate fluid. The openings/apertures in the conduit are typically aligned with the permeate section. The axial range of openings/apertures in the conduit in the first direction is approximately the same as the axial range of the permeate section. The openings/apertures in the conduit may have a smaller axial range than the length of the membrane sheet in the first direction. The area of the conduit having openings/apertures may be closer to the first end than the area that does not comprise openings/apertures. The conduit may have a perforated section, the perforations being the openings/apertures. The conduit may have a non-perforated section. The perforated section may be closer to the first end than the second end.

The module may further comprise a second conduit fluidly coupled to a second permeate section on the second side of the membrane. The second conduit is also typically fluidly connected to a second major surface of the one of more membrane sheet(s) where the second major surface is opposite from the first major surface.

In a configuration comprising both first and second conduits and first and second permeate sections, the permeate fluid can flow to both the first and second conduits on the first and second sides where it will be received and output from the module. The second permeate section may extend along a portion of the outer edge formed by the second side. The permeate section may be a strip of the membrane sheet. Preferably, the second permeate section extends along the first direction. The second permeate section may have the same axial range as the first permeate section in the first direction.

The second portion of the membrane has a higher permeance for the major component than the first portion. Preferably, the permeance of the second portion to the major component is at least twice the permeance of the first portion to the major component. More preferably, the permeance of the second portion to the major component is at least ten times the permeance of the first portion to the major component. The first portion of the membrane sheet has selectivity such that it is selective for the minor component over the major component. The second portion may be a portion of uncoated membrane sheet having no selectivity to the components of the feed fluid but still able to regulate the flow of unseparated feed fluid from the first major surface (the feed side) to the second major surface (the permeate side). However, the second portion of the membrane sheet may have selectivity such that it is also selective for the minor component over the major component. Indeed, if the second portion is also selective for the separation being performed, this is beneficial, but is not required. If the second portion is also selective for the separation being performed, then the second portion of the membrane has lower selectivity than the first portion.

The second portion may form a part of the second major surface of the membrane sheet(s) but not the first major surface. Alternatively, the second portion may form a part of the first major surface of the membrane sheet(s) but not the second major surface. By way of further alternative, the second portion may form a part of both the first and the second major surfaces of the membrane sheet(s). The first portion may form a part of the second major surface of the membrane sheet(s) but not the first major surface. Alternatively, the first portion may form a part of the first major surface of the membrane sheet(s) but not the second major surface. By way of further alternative, the first portion may form a part of both the first and the second major surfaces of the membrane sheet(s). In a preferred arrangement, the first portion forms part of the first major surface and the second portion also forms part of the first major surface. If the first portion and the second portion form part of the same major surface, then the first portion may form the remainder of the major surface that does not form the second portion. If the first portion and the second portion form part of opposite major surfaces, then the first portion and the second portion do not overlap.

The first and second portions may be formed by coating the membrane sheet with first and second coatings, respectively. More specifically, the first portion may be formed by coating the relevant section of the membrane with a first coating and the second portion may be formed by coating the relevant section of the membrane with a second coating. The second coating can be thinner than the first coating or can be made of a different, more permeable coating material. The objective is to make a second portion that has a higher permeance for the major component of the feed fluid than the first portion. The second coating may have a different composition from the first coating.

The first and/or second coatings may be applied to the second major surface of the one or more membrane sheets but not the first major surface of the one or more membrane sheets. Alternatively, the first and/or second coatings may be applied to the first major surface but not the second major surface of the one or more membrane sheets. In some embodiments, the first and/or second coatings may be applied to both the first major surface and the second major surface of the one or more membrane sheet(s). In some arrangements, the first coating may be applied to the first major surface and the second coating may be applied to the second major surface (i.e. such that the second portion extends along/forms part of the second major surface and the first portion extends along/forms part of the first major surface). In further alternative arrangements, the first coating may be applied to the second major surface and the second coating may be applied to the first major surface (i.e. such that the second portion extends along/forms part of the first major surface and the first portion extends along/forms part of the second major surface). If the first coating is applied to an opposite major surface from the second coating, then the area coated by the first coating does not overlap with the area coated by the second coating. In some arrangements, the first portion may be formed by coating the relevant section of the membrane sheet with the first coating and the second portion may be a section of uncoated membrane sheet having no selectivity to the components of the feed fluid but still able to regulate the flow of unseparated feed fluid from the first major surface (the feed side) to the second major surface (the permeate side).

Alternatively, the first portion may be formed by cutting the first portion from a first membrane material and the second portion may be formed by cutting the second portion from a second membrane material. The second membrane material has a higher permeance for the major component than the first membrane material. The first membrane material may have a higher selectivity than the second membrane material. The first and second portions may be sealed together. For example, using an adhesive. In this arrangement, the second portion extends forms part of both the first and second major surfaces of the membrane sheet and the first portion forms part of both the first and second major surfaces of the membrane sheet.

The second portion is offset from the permeate section in the first direction such that it is closer to the second end than the permeate section. The second portion may not overlap the permeate section in the first direction. The second portion may be spaced apart from the permeate section in the first direction.

The second portion may extend along an outer edge of the one or more membrane sheet(s), preferably the outer edge formed by the second end or second side. The second portion may extend along at least a portion of the second end in the second direction. The second portion may extend along at least a portion of the second side in the first direction. The second portion preferably does not overlap the permeate section in the first direction. The area of the second portion is less than 50% of the total area of the membrane sheet, typically less than 20% of total area of the membrane sheet, preferably less than 15% of the total area of the membrane sheet, more preferably less than 10%, most preferably less than 6% of the total area of the membrane sheet. The remaining area of the membrane sheet forms the first portion. Accordingly, the second portion is adjacent to the first portion. The second portion is adjacent to the first portion.

The area of the second portion (the sweep-generating region) of the membrane can be varied over a wide range. The permeance of the sweep-generating region can also be varied by changing the material used and the thickness of the membrane. Thus, the size of the sweep effect can be easily controlled by adjusting the membrane manufacturing process. Once the membrane module has been made, generation of the sweep effect can be completely automatic, no control valves and the like are required.

The one of the one or more membrane sheet(s) may further comprises a third portion. The third portion functions as a baffle to direct flow of permeate fluid towards the first end i.e towards the permeate section. Preferably, the third portion is offset from the permeate section along the first direction such that the third portion is closer to the second end.

The third portion typically has reduced permeance for the major component compared to the first portion. The third portion may be substantially impermeable to the major component and minor component.

The third portion may be formed on the second major surface of the one or more membrane sheets. The third portion may be formed from epoxy or a similar material. The third portion may be formed, for example, by applying tape or glue to the membrane sheet. The third portion may be adjacent to or spaced apart from the permeate section. The third portion typically does not overlap the permeate section in the first direction.

Preferably, the permeate section extends along an outer edge of the membrane sheet. The third portion may extend along the first side or the second side of the membrane sheet. Preferably, the third portion extends along the first direction.

The conduit may have an area that does not have openings/apertures therein. This area may be aligned with the third portion of the membrane sheet.

The membrane module may further comprise one or more feed spacers configured to space apart the one or more membrane sheets wherein each feed spacer is for defining a fluid path for the flow of feed fluid and residue fluid to the outlet. The membrane module may further comprise one or more permeate spacers configured to space apart the one or more membrane sheets, wherein each permeate spacer is for defining a fluid path for the flow of permeate fluid to the conduit.

The permeate spacers and feed spacers may have first and second ends and first and second sides corresponding to the first and second ends and first and second sides of the membrane sheets, respectively. In other words, the second end of each spacer is spaced apart from the first end along the first direction. The first side of each spacer is spaced apart from the second side along a second direction, wherein the second direction is transverse to the first direction.

The permeate spacers and the feed spacers are permeable. The fluid path for the feed fluid and the residue fluid flow along the first major surface of the membrane sheet is through the feed spacer. The fluid path for the permeate fluid along the second major surface of the membrane sheet is through the permeate spacer.

A first membrane sheet of the one or more membrane sheets may be arranged such that a feed spacer is adjacent to the first major surface of the first membrane sheet and a permeate spacer is adjacent to the second major surface of the first membrane sheet. The feed spacer is typically in direct contact with the first major surface of the first membrane sheet and the permeate spacer is typically in direct contact with the second major surface of the second membrane sheet.

The membrane sheets, the one or more feed spacers and the one or more permeate spacers may arranged in a stacked configuration, wherein each space between adjacent membrane sheets is defined by either a feed spacer or a permeate spacer, wherein the membrane sheets are arranged in alternating orientations such that the first major surface of each membrane sheet is in contact with a feed spacer and the second major surface of each membrane sheet is in contact with a permeate spacer.

Adjacent membrane sheets spaced apart by a feed spacer may be sealed along the first and second sides of their first major surface (the feed side) to fluidly seal the fluid path for the flow of feed fluid and residue fluid along the first major surfaces. Adjacent membrane sheets spaced apart by a permeate spacer are sealed along their first and second ends of their second major surface (the permeate side) to fluidly seal the fluid path for the permeate fluid along the second major surfaces. Adjacent membrane sheets spaced apart by a permeate spacer are preferably also sealed along their second sides of their second major surfaces. The seals may be achieved by, for example, using o-rings, adhesive or heat sealing. The feed spacers may also be sealed along their first and second sides, which correspond to the first and second sides of the membrane sheets. Similarly, the permeate spacers may also be sealed along their first and second ends and second sides, which correspond to the first and second ends and second sides of the membrane sheets. In one optional arrangement, the first major surfaces of adjacent membrane sheets may be sealed together along their first and second sides. Similarly, the second major surfaces of adjacent membrane sheets may be sealed together along their first and second ends and second sides.

Membrane sheets may be folded around the feed spacer thereby forming a pair of membrane sheets where the first major surface of each membrane sheet is adjacent to the feed spacer. In other words, the first major surface of each membrane sheet is facing each other and spaced apart by the feed spacer therebetween. In this arrangement, the seal is provided by the fold between the first side of each of the pair of membrane sheets.

Each feed spacer and each permeate spacer may be configured to direct the flow of fluid along the first direction. The feed and permeate spacers may have grooves to direct the flow of fluid. For example, the grooves may be formed in the surface of the feed and permeate spacers. The feed spacer and the permeate spacer may be orientated such that the grooves in the feed spacer and the grooves in the permeate spacer extend along the first direction. Alternatively, the feed and permeate spacers may be corrugated to direct the flow of fluid. The corrugated feed and permeate spacers may have ridges to direct the flow of fluid. The corrugated feed spacers and corrugated permeate spacers may be orientated such that the longitudinal direction of the ridges is parallel to the first direction. By way of further alternative, to direct the flow of fluid, the feed spacers and the permeate spacers may be formed of a material having a different permeability in different directions. This difference in permeability may be achieved by the weave of the fibres in the material used to form the spacer. The feed spacers and the permeate spacers may be orientated such that the high permeance direction (i.e. low flow resistance) is parallel to the first direction.

The spacers may have a thickness of approximately 0.76 to 1.5 mm (0.03 to 0.06 inches). The spacers may be formed of a woven material that may be impregnated with a resin and then calendared to make the surface smooth or grooved.

The feed and permeate spacers typically extend over the same area as the membrane sheet.

The counterflow membrane module may be spiral-wound. In such an embodiment, the conduit is a central tube extending along the first direction. The one or more membrane sheet(s) are wound around the central tube so as to define a spiral perpendicular to the first direction, such that the first side of the one or more membrane sheet(s) is closer to the central tube than the second side. The central tube comprises a cylindrical surface and first and second terminal ends defining a lumen therebetween. The central tube comprises one or more opening(s) in the cylindrical surface, wherein the one or more opening(s) are configured to receive the permeate fluid separated from the feed fluid. The one or more opening(s) are adjacent to the permeate section of the membrane. The one or more opening(s) are offset in the first direction from the permeate section of the membrane sheet such that the one or more opening(s) are closer to the first end than the second portion. The central tube further comprises an outlet configured to output the permeate fluid received by the one or more opening(s), wherein the outlet is in the first or second terminal ends of the central tube.

The one or more opening(s) may be spaced apart from each other. Preferably, the one or more opening(s) are spaced apart along the first direction. The permeate section typically extends over the same axial range as the one or more opening(s) in the first direction. The permeate section is typically directly aligned with the one or more opening(s) in the first direction.

The central tube provides a flow path for the permeate fluid which is received by the one or more opening(s) such that is then flows within the lumen of the central tube along the longitudinal direction of the tube towards and out of the outlet in the first or second terminal ends.

The counterflow membrane module may also be a Plate and Frame module. Plate and Frame modules include a stack of membranes sheets. The membrane sheets are typically separated from each other by the feed spacers and permeate spacers. The stack of membrane sheets separated by the feed spacers and permeate spacers may be compressed between two end plates connected together by a frame. O-ring seals or adhesive sealing layers may be used to contain fluids within the module and to separate the fluid on the first major surface of each membrane sheet (the feed side) from the fluid on the second major surface (permeate side) of each membrane sheet. Ducts may be provided around the edges of the module to introduce and remove fluid from the first and second major surfaces of each membrane sheet.

The present invention also relates to a method of manufacturing the membrane sheets of the membrane module described above. The method comprises providing a roll of precursor sheets, coating a first area of the roll of precursor sheets with a first coating solution and coating a second area of the roll of precursor sheets with a second coating solution to form the roll of membrane sheets. The method further comprises separating the one or more roll(s) of membrane sheets into separate membrane sheets where the first portion of each membrane sheet is formed by the first area of the roll of membrane sheets and the second portion of each membrane sheet is formed by the second area of the roll of membrane sheets, wherein the second portion of each membrane sheet has a higher permeance for the major component than the first portion.

The first coating solution may have the same composition as the second coating solution. In this embodiment, the second area may have a thinner coating of the coating solution than the first area such that the second portion has a higher permeance than the first portion.

The first coating solution may have a different composition than the second coating solution. The first coating solution may have a lower permeability for the major component than the first portion.

The step of coating the first area of the roll of precursor sheets with the first coating solution and coating the second area of the roll of precursor sheets with the second coating solution may be performed for both the first and second major surfaces. Alternatively, the step of coating the first area of the roll of precursor sheets with the first coating solution and coating the second area of the roll of precursor sheets with the second coating solution may be performed for both the first and second major surfaces may be performed for only the first major surface.

The first area and the second area may be adjacent to each other. Preferably, the second area is positioned between two first areas such that, in each membrane sheet, the second portion is formed as a strip and the first portions are provided on either side of the second portion.

The method may further comprise folding each membrane sheet around a feed spacer such that each membrane sheet forms a pair of membrane sheets (i.e a membrane sheet on an upper side of the spacer and a membrane sheet on a lower side of the spacer). The first major surface of each membrane sheet is adjacent to the feed spacer. In other words, the first major surface of each membrane sheet is facing each other and spaced apart by the feed spacer therebetween.

The method may further comprise sealing two membrane sheets together along their first side and positioning a feed spacer therebetween. The surfaces of the membrane sheets adjacent to the feed spacer are the first major surfaces.

The step of coating the first area and the step of coating the second area may be performed simultaneously.

The coating steps may be performed by contacting the roll of membrane sheets with first and second solutions in a coating container, wherein the coating container has first and second sections fluidly separated from each other by separators, the first section containing the first coating solution and the second section containing the second coating solution. The method may further comprise moving the position of the separators to adjust the position and size of the second portion. Preferably, the second section of the coating container is positioned between two first sections of the coating container.

The step of coating the first area and the step of coating the second area may be performed in separate steps.

Another aspect of the invention relates to a method of using a crossflow membrane module to separate a minor component from a feed flow comprising a major component and a minor component according to claim 34. The method may comprise flowing a feed fluid through the inlet and along the first major surface of each membrane sheet. The method may further comprise separating the feed fluid into permeate fluid and residue fluid across the membrane sheet, wherein the residue fluid has a lower concentration of the minor component than the feed fluid and the permeate fluid has a higher concentration of the minor component than the feed fluid. The step of separating the feed fluid across the membrane sheet may comprise separating the feed fluid across the first portion of the membrane sheet to generate the first part of the permeate fluid and separating the feed fluid across the second portion of the membrane sheet to generate the second part of the permeate fluid. The method may further comprise outputting the permeate fluid from the crossflow membrane module via the conduit and outputting the residue fluid from the crossflow membrane module via the outlet. The feed fluid may comprise methane and carbon dioxide where methane is the major component and carbon dioxide is the minor component such that the method is a method of separating carbon dioxide from methane. Instead, the feed fluid may comprise nitrogen and carbon dioxide where nitrogen is the major component and carbon dioxide is the minor component such that the method is a method of separating carbon dioxide from nitrogen.

The present invention does not require valves or piping to control the flow and supply of feed fluid, since this generated internally. Furthermore, the present invention enables a known crossflow module, in particular plate-and-frame and spiral wound modules to be changed to a counterflow configuration employing internal sweep without significant changes to its overall structure.

BRIEF DESCRIPTION OF DRAWINGS

For a better understanding of the invention and to show how the same may be put into effect, reference will now be made, by way of example only, to the accompanying drawings, in which:

Figure 1 is a schematic diagram of known configurations of counterflow, cross-flow and co-flow membrane modules.

Figure 2 is a schematic diagram that includes example calculation demonstrating the separation efficiency of a known membrane module where the separation that can be achieved is pressure ratio controlled.

Figures 3(a) to 3(d) are schematic diagrams of known counterflow membrane module configurations which generate a sweep gas flow externally.

Figures 4(a) and (b) are schematic illustrations from US patent 4687578 and depict a known hollow fiber membrane module that employs a sweep flow generated internally.

Figure 5 is a schematic illustration from US patent 6740140 and depict a known hollow fiber membrane module that employs a sweep flow generated internally.

Figures 6(a) to 6(c) are schematic diagrams that include example calculations demonstrating the effect of module flow configuration on a separation which is within the pressure ratio limited region. Figure 6(a) illustrates a cross-flow membrane module, Figure 6(b) illustrates a counterflow membrane module and Figure 6(c) illustrates a counterflow membrane module while employs a sweep flow generated externally.

Figures 7(a) to (c) are schematic diagrams that include example calculations demonstrating the effect of module flow configuration on a separation which is partially outside the pressure ratio limited region.

Figures 8(a) to (c) are schematic diagrams of known membrane modules.

Figure 9 is a schematic illustration of a coating process that can be used to form membrane sheets in accordance with the invention where each membrane sheet has first and second portions.

Figure 10 is a schematic illustration of a membrane coating process used to form membrane sheets in accordance with the invention where each membrane sheet has first and second portions.

Figure 11 is an illustration of a multilayer composite membrane useful for understanding the invention.

Figure 12 is a schematic diagram of part of a process used to form the counterflow membrane module of the present invention.

Figure 13 is a schematic diagram of part of a process used to form the counterflow membrane module of the present invention.

Figures 14(a) to (e) are schematic diagrams of the sweep flow patterns that can be produced with different orientations of the second portion and/or third portion of the membrane sheets. Figures 14(c) to (e) are in accordance with the present invention

Figure 15(a) is a schematic diagram of a perspective view of a counterflow module of the present invention where the module configured as a plate-and-frame module.

Figure 15(b) is a sectional view of the plate-and-frame module depicted in Figure 15(a).

Figure 16(a) is a schematic diagram of a perspective view of a counterflow module of the present invention where the module configured as a plate-and-frame module.

Figure 16(b) is a sectional view of the plate-and-frame module depicted in Figure 16(a).

Figures 17(a) and (b) are exploded views of a counterflow module of the present invention where the module is configured as a spiral-wound module and comprises membrane sheets and a central tube.

Figure 17(c) is a perspective view of the module of Figures 17(a) and (b) where the membrane sheets are partially wound around the central tube.

Figure 17(d) is a sectional view of the module of Figures 17(a), (b) and (c) from the terminal end of the central tube where the membrane sheets are entirely wound around the central tube.

Figure 18 is an exploded view of a counterflow module of the present invention where the module is configured as a spiral-wound module and comprises membrane sheets and a central tube.

DETAILED DESCRIPTION OF THE INVENTION

Before the present invention, modules employing a sweep fluid have been applied to counterflow hollow fiber modules, with a form similar to that in Figures 3, 4, 5 and 8 in which a sweep fluid is introduced at the residue end of the module to enhance the performance of a countercurrent module. The module configuration of our invention uses an internally generated sweep fluid in a membrane module which employs one or more membrane sheet(s), which are necessarily flat/planar. The membrane module of the present invention may be configured as a spiral-wound or plate-and-frame module. In the present invention, the sweep fluid flow is controlled by permeating a part of the feed fluid into the permeate fluid. Accordingly, the sweep fluid is generated internally. Using internally generated sweep in a membrane module having membrane sheets leads to surprising technical effects.

Membrane Sheet Formation

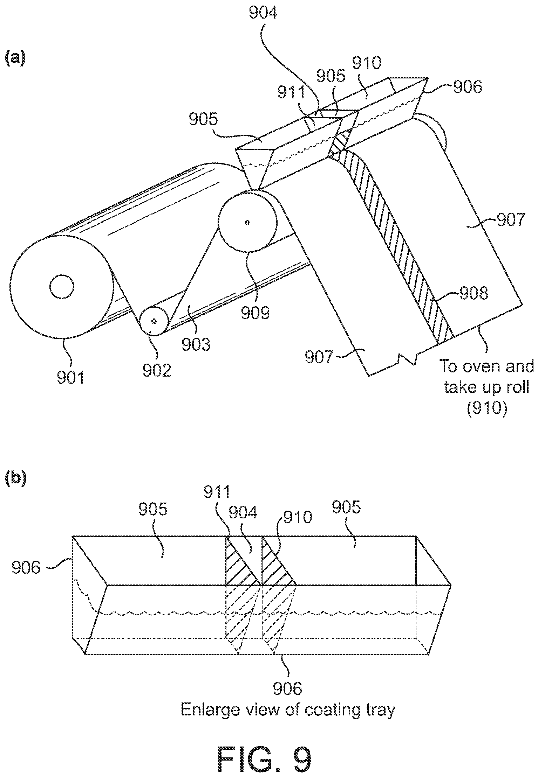

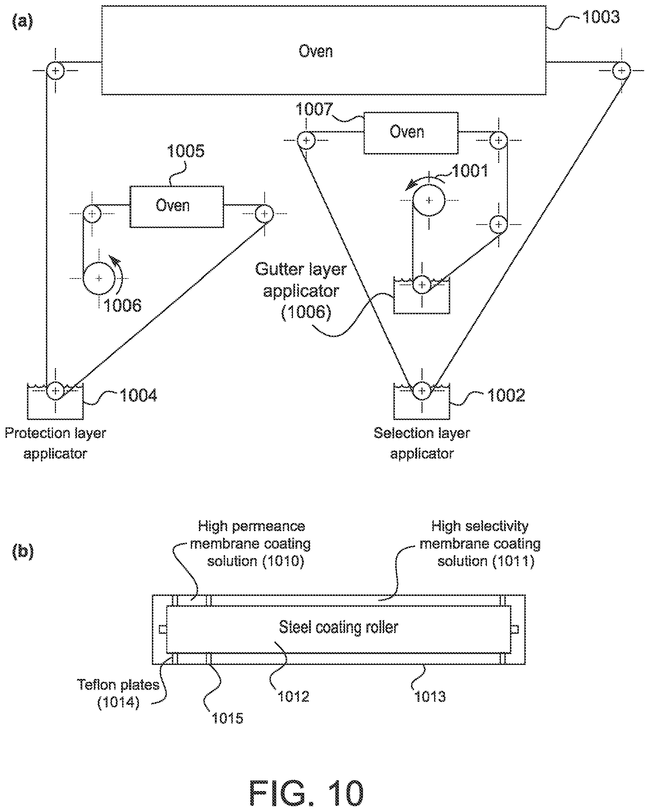

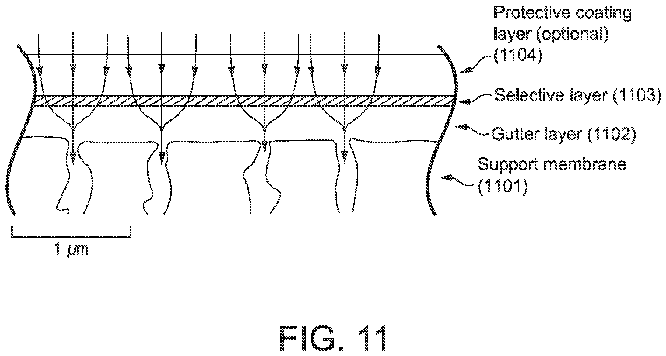

This invention is focused on the use of modules comprising flat sheet membranes. The flat sheet membranes may be formed into spiral wound or plate-and-frame modules. The membrane used to make the modules is usually made as continuous rolls typically 1 to 1.5 m (40 to 60 inches) wide and several hundred meters long. The selective layer used to perform the separation is usually thin and delicate and so almost all membranes are made by a coating or casting/precipitation process in which the membrane is formed onto a roll of strong non-woven support paper that provides mechanical strength. A range of coating and casting procedures are used to prepare these membranes as described, for example, in "Membrane Technology and Applications", Richard Baker, John Wiley ed., (2012). This invention is not limited to any particular type of membrane, and those skilled in the art will be able to modify known membrane production techniques to make the membrane sheets needed for the present invention.
By way of example, Figure 9 shows how a conventional coating process can be adapted to make membrane sheets having first and second portions used in the present invention. In Figure 9, a role of support membrane is taken from feed roll 901 and pulled underneath a coating container 906 and over coating roll 909. The coating container 906 used to dispense the coating solution has first sections 905 positioned either side of a second section 904 where the sections 904, 905 are separated from each other by separators (dams) 910 and 911. The separators 910, 911 are thin. The first sections 905 contain a first coating solution and the second section 904 contains a second coating solution. Two coated areas are produced on the paper film as it passes underneath the coating container. First Area 907 is coated with coating solution from the first section 905 and forms the first portion of the membrane sheets. Second area 908 is coated with coating solution from the second section 904 and forms the second portion. The second coating solution has a higher permeance for the major component than the first coating solution. Consequently, the second portion has a higher permeance than the first portion, in particular for the major component. The first portion has a higher selectivity than the second portion.
The coating of the first and second areas 907, 908 may be performed on only the first major surface of each membrane sheet. Alternatively, the coating of the first and second areas 907, 908 may be performed on both the first major surface and the second major surface of each membrane sheet.
By moving the position of the separators (dams), 910, 911, the position and size of the strip of the second portion (the high permeance membrane) can be varied from one side of the membrane to the other. The flux of permeate through this portion/area of membrane is easily controlled by adjusting the composition of the coating solution and the area of the strip.
In the example apparatus shown in Figure 9, both portions of the membrane were formed in the same coating operation. However, it may be easier to first form one portion of the membrane and then, in a second operation, form the second portion. Both options are encompassed within the present invention.
A second type of membrane coating apparatus representative of what may be used to make membrane sheets of the present invention is shown in Figure 10. This type of equipment is used to make membrane sheets that are multilayer composite membrane sheets, as shown in Figure 11. Composite membrane sheets are multilayer structures consisting of a microporous support 1101 that provides the mechanical strength and several coating layers that make up the selective membrane. The first layer is the gutter layer 1102 which is made from a very high permeance but non selective material. The gutter layer 1102 serves to conduct permeate to the pores of the support membrane, and it also provides a smooth surface on which the selective layer 1103 can be coated. The selective layer 1103 is then coated with a final protective layer 1104 of high permeance polymer that serves to protect the selective layer from damage during module preparation or use.

The apparatus that may be used to make such membrane sheets is shown in Figure 10. A roll of support paper 1001 is first passed through the gutter layer applicator 1006 after which the membrane is dried in oven 1007. The membrane then passes to the selective layer applicator where the selective layer is applied, after which the membrane is again dried in oven 1003. Finally, the membrane is coated with a protective layer with applicator 1004 before being dried in oven 1005.

One or more of the coating containers used in this apparatus can be modified as shown in Figure 10(b) to produce regions of the membrane with the different permeation properties needed. Two Teflon plates 1014 and 1015 are shaped to snuggly fit around the steel rolling bar and serve to divide the coating container into two sections, allowing different membranes to be coated onto the moving support.

The second portions (high permeance areas) of the membrane sheets produced by the process illustrated in Figures 9 and 10 are formed as continuous strips along the membrane sheets. Depending on the configuration of the membrane module being constructed, sections of the strips may be occluded by covering with tape or other means if desired.

Construction of the Membrane Module

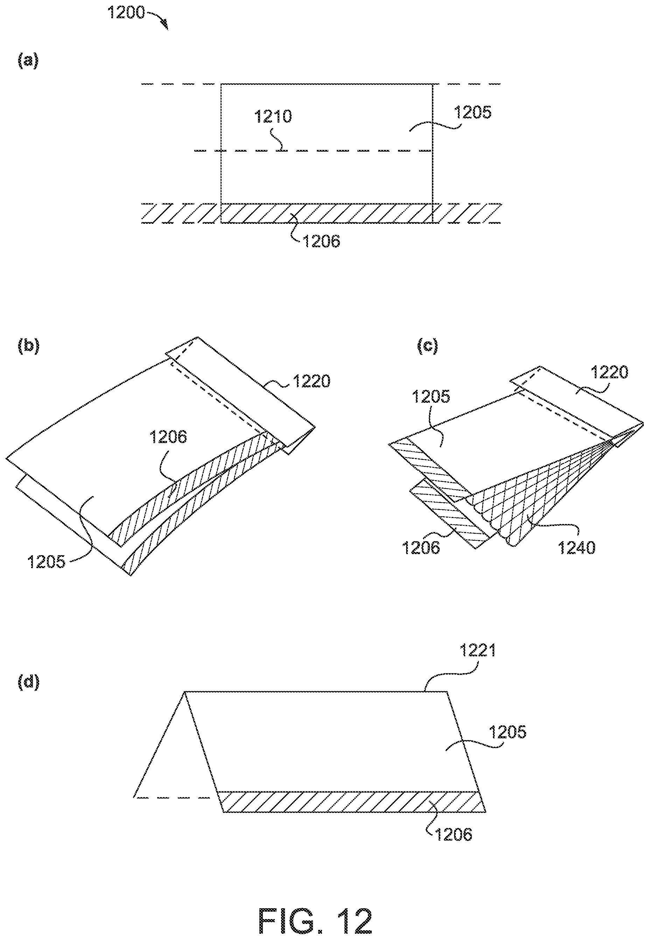

In the description of Figure 9 and 10, the methods of making membrane rolls with the second portion (i.e. high permeance area) formed as a strip of the membrane along one edge of the role were described. Such a membrane roll could be cut and fabricated into membrane sheets that may be assembled together in several ways as Figure 12 shows.

In Figure 12(a), sheets of membrane are cut from the role consisting of high selectivity membrane having a strip of high permeance membrane (i.e. the second portion) 1206 along one edge. The remainder of the membrane sheet that is not the second portion 1206 (i.e. the area of high selectivity) forms the first portion 1205. Figures 12(b) and 12(c) show how two sheets of membrane may be sealed together along a side edge. In Figure 12b, this is done by using an adhesive tape 1220, but an epoxy or urethane glue could be used in addition or instead. In Figure 12(b), the second portion (high permeance strip) 1206 extends transverse to the edge where the membrane sheets are joined. In Figure 12(c), the membrane sheets are joined at the opposite edge from second portion (the high permeance strip). Exemplary methods of laminating membrane sheets together for membrane modules are described in U.S. Patent 8, 661,648. Finally, it is also possible to cut the membrane sheet and fold it along the longitudinal axis 1210 as shown in Figure 12(d). The second portion (the region of high permeance) 1206 is spaced apart from the fold 1221 along a direction transverse to the longitudinal axis. In particular, the second portion 1206 is opposite to the fold 1221. A feed spacer 1240 is provided within the space defined by the fold or within the space between the sealed membrane sheets so as to provide a fluid path along the major surfaces of the membrane sheets 1200. The membrane may be folded around the feed spacer 1240 such that a membrane sheet 1200 is provided on either side of the feed spacer 1240.

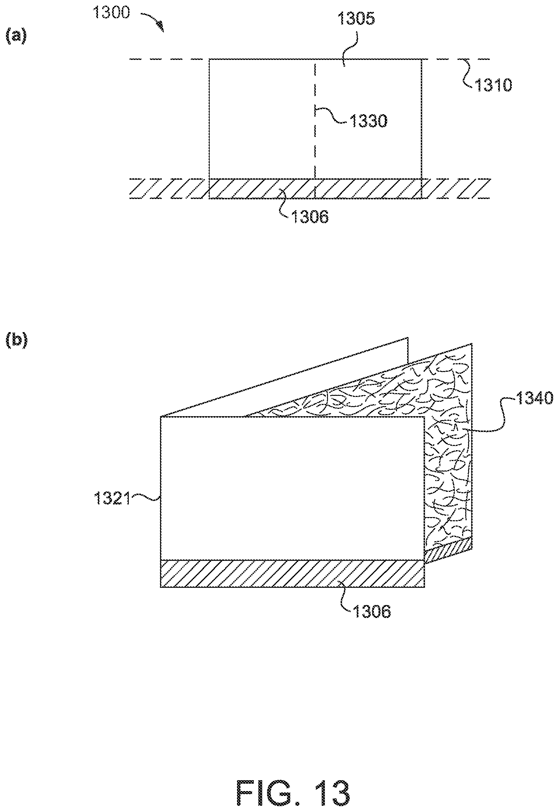

Figure 13 shows that a number of membrane sheets 1300 could be assembled together by cutting rectangular sheets of membrane along their longitudinal axis 1310 and then folding the membrane sheets along the transverse direction 1330. The fold 1331 is then preferably perpendicular to the second portion (the high permeance area of the membrane) 1306. A feed spacer 1340 is provided within the spaced defined by the fold so as to provide a fluid path along the major surfaces of the membrane sheets 1300.

When the membrane sheets 1200, 1300 folded around the feed spacer 1240, 1340, this may be considered to form a pair of membrane sheets where the first major surface of each membrane sheet is adjacent to the feed spacer. In other words, the first major surface of each membrane sheet is facing each other and spaced apart by the feed spacer 1240, 1340 therebetween. The pair of membrane sheets may be considered to be a membrane envelope.

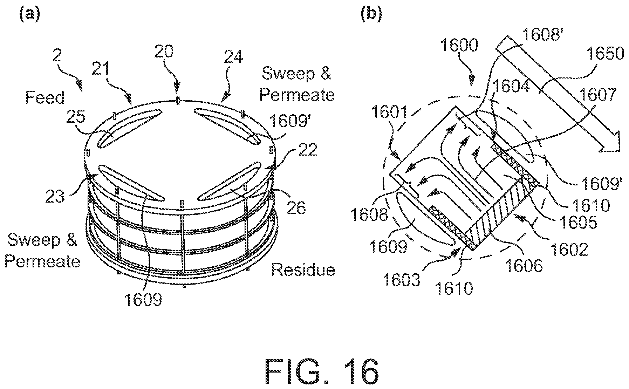

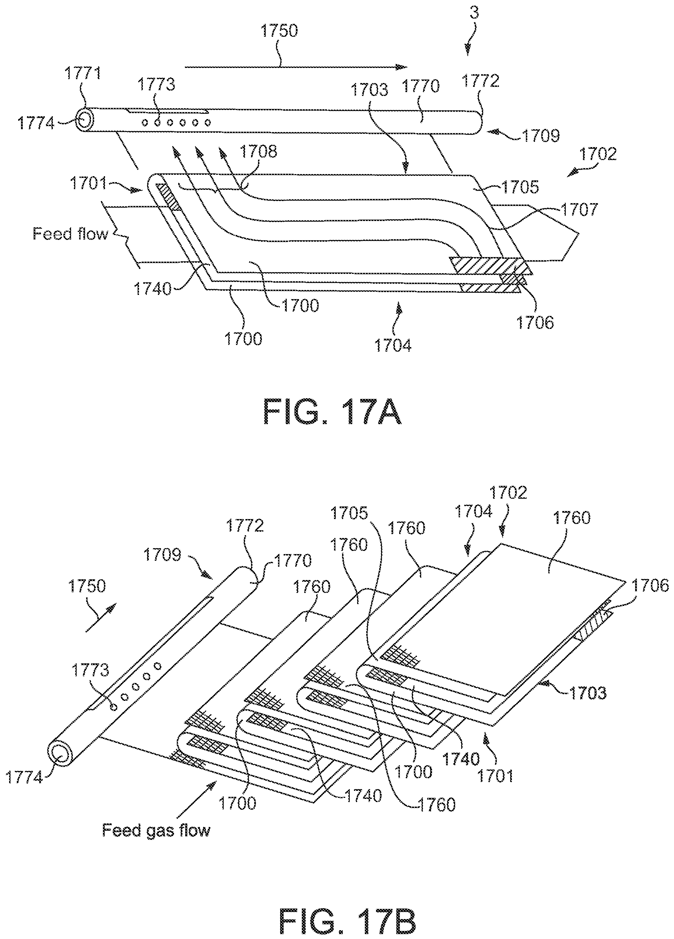

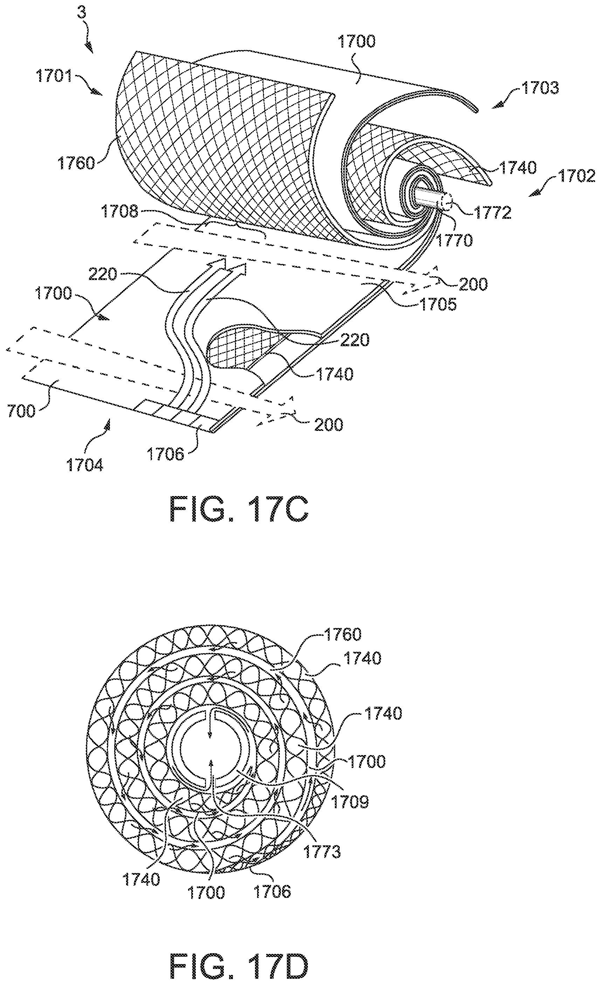

The membrane sheets 1200, 1300 are assembled in modules, typically spiral-wound or plate-and-frame modules as shown in Figures 16 and 17. These modules are widely used in gas separation and pervaporation applications. Spiral wound modules are typically contained in a cylindrical pressure vessel. In known modules, the entire membrane sheet 1200, 1300 that encloses the fluid path for permeate fluid would be made of the same selective membrane. In our invention, a portion (the second portion 1206, 1306) of the membrane sheet 1200, 1300 has a much higher average permeance than the rest of the membrane sheet. The second portion 1206, 1306 will also have a lower selectivity. Because of its higher permeance and lower selectivity, a counterflow sweep effect is generated in the flow path for the permeate fluid by the fluid permeating the second portion 1206 1306 of the membrane sheet.

Configurations of the Membrane Module

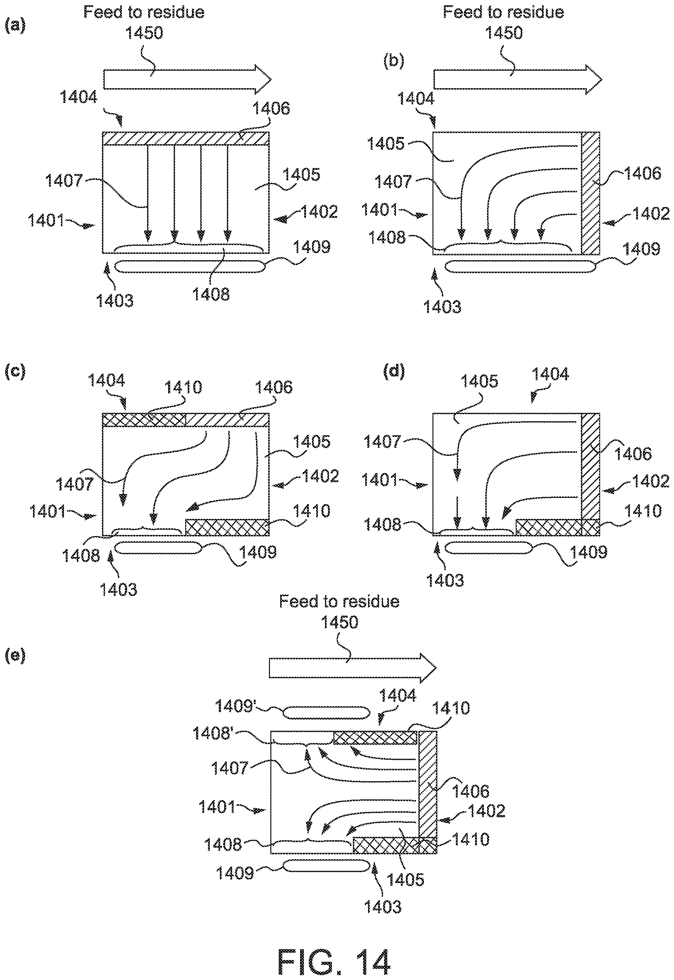

Some of the possible configurations for the first 1405 and second 1406 portions (and in some cases also the third portion 1410) of the membrane sheet 1400, are shown in Figure 14 together with the consequent flow paths for the flow of the permeate fluid 1407. Membrane sheets having these configurations can be incorporated into spiral wound or plate-and-frame modules. In each configuration, the second end 1402 of the membrane sheet 1400 is spaced apart from the first end 1401 along the first direction 1450. The second side 1404 of the membrane sheet 1400 is spaced apart from the first side 1403 along the second direction, which is transverse to the first direction 1450. The flow paths for the permeate fluid are indicated by the arrows labelled with reference numeral 1407. Therefore, it can be seen that a variety of flow patterns for the permeate fluid 1407 (i.e. on the second major surface/permeate side of the membrane) are possible. The first direction 1450 is indicated by the arrow from left to right in the figures. In the exemplary configurations shown in Figure 14, the feed fluid flowing along the first major surface of the membrane sheet 1400 follows a generally straight path along the first direction 1450, which is from left to right in the Figures. Figure 14(a) is not in accordance with the invention, since this depicts a cross-flow configuration where the flow of permeate fluid 1407 is transverse to the flow of feed fluid. Figure 14(b) is not in accordance with the claims, since it does not comprise the third portion. Figures 14(c) to 14(e) are in accordance with the present invention, since they depict counterflow configurations where the flow of permeate fluid is in the opposite direction from the flow of feed fluid. Indeed, in these figures, the flow of feed fluid is along the first direction 1450 which is from left to right whereas at the flow of permeate fluid, or at least a component of permeate fluid, particularly the second part of permeate fluid, is from right to left. The permeate section 1408 of the membrane sheet 1400 is that proximal (i.e. adjacent) to the conduit 1409 i.e. where the arrow heads for the flow of the permeate fluid 1407 are positioned. The conduit 1409, and the permeate section 1408 extend along the first direction 1450. The conduit 1409 comprises opening(s)/aperture(s) configured to receive the permeate fluid. The axial range of opening(s)/aperture(s) in the conduit is the same as the axial range of the permeate section 1408 in the first direction 1450.

Figure 14a shows a configuration for the membrane sheets not in accordance with the invention. In this configuration, the second portion 1406 (the high permeance region of the membrane) is opposite to the permeate section 1408. The second portion 1406 is not offset in the first direction 1450 from the permeate section 1408 of the membrane sheet 1400. Therefore, the counterflow sweep effect is not achieved (i.e. the second part of the permeate fluid 1407 does not flow from right to left in the Figure). Instead, a cross flow sweep effect is produced.

Figures 14(b) shows an embodiment not in accordance with the claims. Figures 14(c) to 14(e) show possible configuration for the conduit and membrane sheets of the present invention, which can produce better results than the membrane sheets shown in Figure 14(a). In the configurations shown in Figures 14(b) to 14(e), the conduit 1409 extends along the first direction 1450 proximal to the first side 1403 or both the first side 1403 and the second side 1404. The length of the oval representative of the conduit 1409 shown in Figure 14 is representative of axial range of the openings/apertures in the conduit 1409. For example, in Figure 14(c), the conduit 1409 may extend over the same axial range as the membrane sheet in the first direction but the openings/apertures in the conduit 1409 only extend over approximately half of the length of membrane sheet in the first direction.

In Figures 14(b) to 14(e), the second portion 1406 (the high permeance strip) extends along an outer edge of the membrane sheet 1400. In particular, the second portion 1406 extends along the edge of the membrane formed by the second end 1402 or along a portion of the edge formed by the second 1404 side. The remainder of the membrane sheet 1400, which is not the second portion 1406, is considered to be the first portion 1405 (the high selective area). The configurations shown in Figures 14(b) to (d) may be used in a spiral-wound module or plate-and-frame module. The configuration shown in Figure 14(e) is particularly suitable for a plate-and-frame module.

In the configuration shown in Figure 14(b), the second portion 1406 (the high permeance strip) is offset in the first direction from the permeate section 1408 such that it is closer to the second end 1402 that the first portion 1405. In particular, the permeate section 1408 extends along the first direction 1450 and the second portion 1406 extends along the second direction such that the second portion 1406 is transverse, and may be perpendicular to the permeate section 1408. The sweep effect from the second part of the permeate fluid passing through the second portion 1406 produces a counterflow effect over much of the first portion 1405 of the membrane sheet 1400 (the selective area of the membrane).

Figures 14(c) and 14(d) demonstrate how the inclusion of the third portion 1410, which is configured to direct flow of permeate fluid towards the permeate section and so acts as a baffle. The third portion 1410 therefore provides further directional control of the flow of permeate fluid, in particular the second part of the permeate fluid. The third portion 1410 is optionally included in these embodiments and is provided on the second major surface of the membrane sheet 1400. The third portion 1410 is substantially impermeable to the major component and minor component. The third portion 1410 directs the second part of the permeate fluid to flow in the opposite direction from the first direction (i.e. towards the first end 1401). The third portion 1410 may cover a portion of the edge formed by the first side 1403 of the membrane sheet 1400 thereby restricting the axial range of the permeate section in the first direction. The third portion 1410 therefore enhances flow of the second part of the permeate fluid 1407 in the direction opposite to the first direction 1450 (i.e. enhances the sweep effect). As discussed above, in Figure 14(c), the conduit 1409 may be extend over the same axial range as the membrane sheet in the first direction but the openings/apertures in the conduit 1409 only extend over approximately half of the length of membrane sheet in the first direction. In particular, the openings/apertures extend over the same axial range of the permeate portion 1408 such that there are directly aligned. The remaining area of the conduit is directly aligned with the third portion 1410 and does not comprise apertures/openings.

In these figures, the third portion 1410 is offset from the permeate section 1408 along the first direction 1450 such that the third portion 1410 is closer to the second end 1402. The third portion 1410 extends along an edge of the membrane sheet 1400. In Figure 14(c), the third portion 1410 extends along a portion of the outer edge formed by the first side 1403 and a portion of the outer edge formed by the second side 1404. In Figure 14(d), the third portion 1410 extends along a portion of the outer edge formed by the first side 1403. The third portion 1410 may be formed by applying tape or glue to the membrane sheet 1400.

Figure 14(e) is a modified version of a continual cross-flow module, which has been modified to be a counterflow module with an internally generated sweep effect. In this configuration, two conduits 1409, 1409' are employed. The first conduit 1409 is adjacent to the permeate section 1408 on the first side 1403 of the membrane sheet 1400 and the second conduit 1409' is adjacent to the permeate section 1408' on the second side 1404 of the membrane sheet 1400. As shown by the arrows, the permeate fluid can flow to both the first and second conduits 1409, 1409' via the first and second permeate sections 1408, 1408' on the first and second sides 1403, 1404 of the membrane sheet 1400 where it will be received and output from the module. The first and second permeate sections 1408, 1408' extend along the first direction 1450. The axial range of openings (not shown) in the first and second conduits 1409, 1409' is approximately the same as the axial range of the first and second permeate sections 1408, 1408', respectively, in the first direction 1450. The first permeate section 1408 extends along a portion of the outer edge formed by the first side 1403. The second permeate section 1408' extends along a portion of the outer edge formed by the second side 1404. The second portion 1406 is offset from the first and second permeate sections 1408, 1408' along the first direction 1450 such that the second portion 1406 is closer to the second end 1402 than the first and second permeate sections 1408, 1408'. The membrane sheet 1400 further comprises third portions 1410 that guide the flow of the second part of the permeate fluid 1407 in a direction opposite from the first direction 1450 i.e. towards the first end 1401. One third portion 1410 extends along the outer edge formed by the first side 1403 and one third portion 1410 extends along the outer edge formed by the second side 1404. The third portions 1410 are both offset from the permeate sections 1408, 1408' in the first direction 1450 such that the third portions 1410 are closer to the second end 1402 than the permeate sections 1408, 1408'. There is no overlap between the third portions 1410 and the permeate sections 1408, 1408'.

The conduit 1409 is the manifold through which the permeating fluid (i.e. the first part of the permeate fluid and the second part of the permeate fluid (the sweep gas/fluid)) are removed from the module. In many modules, there is only one outlet for fluid to exit from the conduit 1409 and all the fluid is removed through this outlet. In other modules, a plug can be used to divide the conduit and so two outlets are formed.

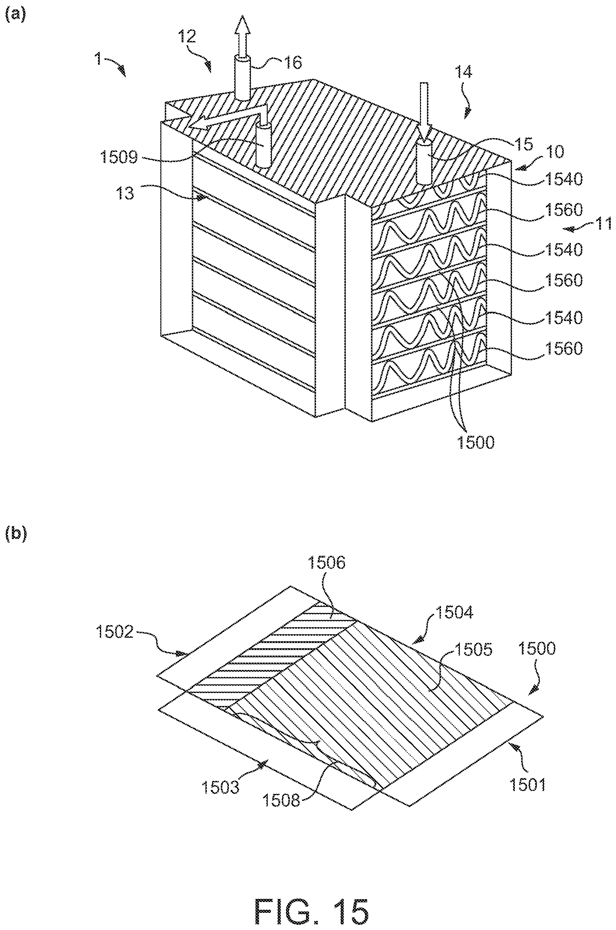

Figure 15(a) is a perspective view of a counterflow membrane module 1 of the present invention formed as a plate-and-frame module. Figure 15(b) is a plan view of a membrane sheet 1500 of the module 1. The module 1 comprises a housing 10. The housing 10 comprises a first end 11 spaced apart from a second end 12 along the first direction. The housing 10 comprises a first side 13 spaced apart from a second side 14 along a second direction which is transverse to the first direction 1550. The module 1 comprises a plurality of membrane sheets 1500, feed spacers 1540 and permeate spacers 1560 arranged in a stacked configuration. Each space between adjacent membrane sheets 1500 is defined by either a feed spacer 1540 or a permeate spacer 1560. The membrane sheets 1500 are arranged in alternating orientations such that the first major surface of each membrane sheet 1500 is in contact with a feed spacer 1540 and the second major surface of each membrane sheet 1500 is in contact with a permeate spacer 1560. The feed spacers 1540 and the permeate spacers 1560 define paths for the flow of fluid between each membrane sheet 1500. The membrane sheets 1500 may be any of those discussed in the present application, in particular of the configuration shown in Figures 14(c) to 14(d). If the configuration shown in Figure 14(e) is employed for the membrane sheets, then the module would need to be modified to include a second conduit, the second conduit being in fluid communication with the second side 14 of each membrane sheet. The membrane sheets 1500 may be folded around the feed spacers 1540 to form pairs of membrane sheets wherein for each pair of membrane sheets, the first major surfaces are separated by the feed spacer 1540 therebetween. The first major surfaces either side of a feed spacer 1540 may be sealed along their second side 1504 so as to define a fluid path through the feed spacer 1540 along the first major surfaces.

A permeate spacer 1560 is provided adjacent to the second major surface of each membrane sheet 1500. The permeate spacers 1560 separate each pair of membrane sheets 1500 folded around the feed spacer 1540 from the subsequent pair of membrane sheets 1500. The second major surfaces of each membrane sheet 1500 (the permeate side) may be sealed along their second side 1504, first end 1501 and second end 1502 so as to define a fluid path through the permeate spacer 1560 to the conduit 1509 along the second major surfaces. The sealing may be achieved with, for example, tape, sealing fluid, heat sealing, o-rings or sealing layers. The first side 1503 of the second major surface is open (i.e. unsealed) to fluidly connect with the conduit 1509.

In the arrangement shown in Figure 15(a), the feed spacers 1540 and the permeate spacers 1560 are corrugated. The corrugated feed spacers 1540 and the corrugated permeate spacers 1560 are arranged so that the longitudinal direction of the ridges extends parallel to the first direction. The ridges define flow paths thereby directing flow along the first direction.

The arrangement where membrane sheets 1500 are folded around a feed spacer 1540 may be considered to be a membrane envelope. A series of membrane envelopes may be created and then layered one on top of the other, interleaved with permeate spacers 1560. As many as 50 to 100 envelopes maybe contained within the housing 10.

An inlet 15 is provided at the first end 11 of the housing 10 and an outlet 16 is provided at the second end 12 of the housing 10. The inlet 15 is in fluid communication with the first end 1501 of the first major surface (the feed side) of each of the membrane sheets 1500. The outlet 16 is in fluid communication with the second end 1502 of the first major surface (the feed side) of each of the membrane sheets 1500. Ducts may be employed to achieve fluid communication between the inlet 15 and the outlet 16 with the first major surfaces of each of the membrane sheets 1500. The ducts are not shown in this drawing to allow the interior configuration of the fluid paths defined by the feed spacers 1540 and permeate spacers 1560 to be seen.

The entire arrangement has the general form of a large book. In the embodiment shown in Figure 15(a), the conduit 1509, the inlet 15 and the outlet 16 are positioned on an outer surface of the housing with the inlet 15 proximal to the first end 11, the outlet proximal to the second end 12 and the conduit proximal to the first side. The conduit being closer to the first end 11 than the second end 12. The inlet 15, the outlet 16 and the conduit 1790 are optionally formed as ports.

In use, feed fluid passes along one major surface of the membrane sheet 1500 from the inlet 15 towards the outlet 16 via the fluid path defined by the feed spacer 1540 (i.e through the feed spacer 1540) between adjacent membrane sheets 1500 along the first direction 1550. A portion of the feed fluid permeates through the respective membrane sheet 1500 and is referred to as the permeate fluid. The permeate fluid moves along the opposite major surface from the feed fluid (i.e. the second major surface). A first part of the permeate fluid is generated by feed fluid passing through the first portion 1505 of the membrane sheet 1500 and a second part of the permeate fluid is generated by feed fluid passing through the second portion 1506 of the membrane sheet 1500. The second portion 1506 has a greater permeance for the major component than the first portion 1505 and so the second part of the permeate fluid has a higher concentration of the major component. The second part moves towards the first end 11. The second part therefore dilutes the concentration of the minor component within the first part of the permeate fluid (i.e. a sweep effect) thereby increasing the driving force for the separation across the membrane sheet 1500. The conduit 1509 is adjacent to and in fluid communication with the permeate section 1508 provided on the first side 1503 of the second major surface of each membrane sheet 1500. For example, the permeate section 1508 of each membrane sheet 1500 may be formed on an open edge of the second major surface of each membrane sheet 1500 that is adjacent to and in fluid communication with the conduit 1509. In other words, the area of the first side 1503 of the second major surface of each membrane sheet that defines the permeate section may not be sealed. The area of the first side 1503 of the second major surface of each membrane sheet that does not define the permeate section may be sealed. Alternatively, all of the first side 1503 of the second major surface of each membrane sheet may not be sealed. The first and second ends of the membrane sheet may be sealed. The sealing may be achieved by using tape or sealing fluid. The conduit 1509 receives the permeate fluid via an aperture/opening and outputs the permeate fluid from the module 1.

As shown in Figure 15(b), the membrane sheet 1500 may be configured such that the second portion 1506 extends along a part of the outer edge formed by the second end. The permeate section 1508 does not overlap with the second portion 1506.

Figure 16(a) is a simplified perspective view of a plate-and-frame module 2 formed according to this invention. Figure 16(b) is a plan view of a section of the module of Figure 16(a) to illustrate the configuration of one of the membrane sheets 1600 therein. In the module shown in Figure 16(a), multiple membrane sheets 1600 are stacked on top of each other with feed spacers and permeate spacers (not shown) therebetween. In particular, the feed spacers may be placed within a fold of the membrane such that membrane sheets 1600 are on either side of the fold, as discussed in respect of Figures 12 and 13. As many as 50 to 100 pairs of membrane sheets having a spacer therebetween maybe contained with the housing 20. The feed spacers and the permeate spacers are configured as discussed in respect of Figure 15.

The housing 20 is formed as a cylinder in Figure 16(a). The housing has its second end 22 spaced apart from its first end 21 along the first direction 1650 and its second side 24 spaced apart from its first side 23 along the second direction, which is transverse to the first direction. As shown in Figure 16(b), the membrane sheets therein are configured as shown in Figure 14(e) which has been discussed above. As discussed above, the membrane sheets 1600 in such a configuration have a second portion 1606 extending along the outer edge formed by the second end 1602 of the membrane sheet 1600. The membrane sheets have two permeate sections 1608, 1608' extending along a portion of the first and second sides 1603, 1604 of the membrane sheet 1600, respectively. The membrane sheets also have two third portions 1610, one extending along a portion of the first side 1603 and one extending along a portion of the second side. The third portions 1610 are offset from the permeate sections 1608, 1608' along the first direction 1650 such that the third portions 1610 are closer to the second end 1602 than the permeate sections 1608, 1608'. An inlet 25 is provided at the first end 21 of the housing 20 and an outlet 26 is provided at the second end 22 of the housing 20. The inlet 25 is in fluid communication with the first end 1601 of each of the membrane sheets 1600. The outlet 26 is in fluid communication with the second end 1602 of each of the membrane sheets 1500.

In the embodiment shown in Figure 16(a), the first major surfaces of each of the membrane sheets 1600 would be sealed along their first and second sides 1603, 1604 to define a fluid path from the inlet 25 to the outlet 26 along the first major surface through the feed spacer (not shown). The second major surfaces of each of the membrane sheets 1600 would be sealed along their first end 1601, second end 1602 to define a fluid path along the second major surface to the first and second conduits 1609, 1609' through the permeate spacer (not shown). At least the areas of the first and second sides 1603, 1604 defining permeate sections 1608, 1608' would be open (i.e. unsealed) to fluidly connect with the conduit. The entire first and second sides 1603, 1604 may be unsealed.

The first conduit 1609 is provided on the first side 23 of the housing 20 and the second conduit 1609' is provided on the second side 24 of the housing 20 such that the first and second conduits 1609, 1609' are spaced apart along the second direction. The first conduit 1609 is adjacent to the permeate section 1608 on the first side 1603 and the second conduit 1609' is adjacent to the permeate section 1608' on the second side 1604. The first and second conduits 1609, 1609' each have apertures for receipt of the permeate fluid.

For the embodiment shown in Figure 16, in use, feed fluid passes along the first major surface of the membrane sheet 1600 from the inlet 25 towards the outlet 26 via the fluid path defined by the feed spacer 1640 between adjacent membrane sheets 1600 along the first direction. The first and second sides 1603, 1604 of the first major surface of each membrane sheet 1600 are sealed to fluidly seal the fluid path for the feed fluid and residue fluid along the first major surface. A portion of the feed fluid permeates through the respective membrane sheet 1600 and is referred to as the permeate fluid. The permeate fluid moves along the second major surface of the membrane sheet 1600 (i.e. the major surface of the membrane sheet 1600 opposite from the major surface along which the feed and residue fluid flows). A first part of the permeate fluid is generated by feed fluid passing through the first portion 1605 of the membrane sheet and a second part of the permeate fluid is generated by feed fluid passing through the second portion 1606 of the membrane sheet 1600. The second portion 1606 has a greater permeance for the major component than the first portion 1605 and so the second part of the permeate fluid has a higher concentration of the major component. The second part of the permeate fluid moves towards the first end 21 as indicated by the arrows 1607. The second part of the permeate fluid therefore dilutes the concentration of the minor component within the first part of the permeate fluid (i.e. a sweep effect) thereby increasing the driving force for the separation across the membrane sheet 1600. As discussed above, the first and second sides of the second major surface of the membrane sheet 1600 defining the permeate sections 1608, 1608' are open such that the permeate sections 1608, 1608' are adjacent to and in direct fluid communication with the conduit 1609. The first and second ends 1601, 1602 of the second major surface of the membrane sheet 1600 may be sealed with tape or adhesive to seal to the fluid path for the permeate fluid defined by the permeate spacer 1660. The conduits 1609, 1609' receive the permeate fluid and output the permeate fluid from the module 2.

Figures 17(a) to (d) depict a counterflow membrane module of the present invention formed as a spiral-wound module. Figure 17(a) and (b) are exploded views of the module 3. Such modules are very useful for gas separation and pervaporation applications. In this arrangement, the membrane sheets 1700, although not shown due to the exploded view, would be wound around the conduit 1709 to define a spiral perpendicular to the first direction. However, in this exploded view, the membrane sheets 1700 are shown in an unwound state. There are spaces for fluid flow between each sheet 1700 due to the presence of feed spacers 1740 and permeate spacers 1760 therebetween. The membrane sheets 1700 may be folded over the feed spacer 1740 to form a pair of membrane sheets where the first major surface of each membrane sheet is adjacent to the feed spacer 1740. In other words, the first major surface of each membrane sheet is facing each other and spaced apart by the feed spacer 1740 therebetween. The pair of membrane sheets may be separated from adjacent pairs of membrane sheets by permeate spacers 1760 where each permeate spacer 1760 is adjacent to a second major surface of the membrane sheets 1700. The first major surface of each membrane sheet may be sealed along its first side 1703 and second side 1704 to define the fluid path for the feed fluid and residue fluid along the first major surface. In this arrangement, the seal along the first side 1703 is provided by the fold between the first side 1703 of each of the pair of membrane sheets 1700. The second major surface of each membrane sheet 1700 may be sealed along its first end 1701, second end 1702 and second side 1704 to define the fluid path for permeate fluid along the second major surface. Figure 17(b) differs from 17(a) as more membrane sheets 1700, feed spacers 1740 and permeate spacers 1760 are present. The feed spacer 1740 is configured to direct flow of fluid in the first direction. The permeate spacer 1760 is configured to direct flow of fluid in the first direction. The direction of the flow of fluid by the spacers is achieved by forming the spacers of a material having different permeability in different directions. This difference in permeability is achieved by the weave of the fibres in the material used to form the spacer. The feed spacers 1740 and the permeate spacers 1760 are is orientated such that the high permeance direction (i.e. low flow resistance) is parallel to the first direction.

The central tube 1709 comprises a cylindrical surface 1770 and first and second terminal ends 1771, 1772 defining a lumen therebetween. The central tube 1709 comprises openings 1773 in the cylindrical surface. The openings are configured to receive the permeate fluid separated from the feed fluid. The openings are adjacent to and in fluid communication with the permeate section 1708 of the membrane, which is on the first side 1703 of the membrane sheet 1700. The openings 1773 are offset in the first direction 1750 from the second portion 1706 of the membrane sheet 1700 such that the openings 1773 are closer to the first end 1701 than the second portion 1706.

The conduit 1709 further comprises an outlet 1774 configured to output the permeate fluid received by the one or more opening(s), wherein the outlet is in the first or second terminal end of the central tube 1771, 1772. The outlet is optionally shown at the first terminal end 1771 of the central tube 1709 in Figure 17.

The openings/apertures 1773 in the conduit 1709 are spaced apart along the first direction 1750. The axial range of the openings/apertures 1773 in the conduit 1709 in the first direction 1750 is less than the axial range of the membrane sheet 1700 in the first direction 1750. Indeed, in a conventional (crossflow) spiral-wound module, the conduit 1709 would have openings over the entire axial range of the conduit 1709. However, in this invention, only a portion of the conduit 1709, typically approximately one-third to one-half of the axial length (1907) comprises openings/apertures 1773, while the remaining length does not have openings/apertures 1773. The openings/apertures 1773 in the conduit 1709 are closer to the first end 1701 than the second end 1702. The permeate section 1708 extends along the first side 1703 and has the same axial range as the openings/apertures 1773 in the conduit 1709 along the first direction 1750.

The second portion 1706 is formed as a strip. The second portion 1706 is closer to the second end 1702 than the permeate section 1708. The second portion 1706 extends along a portion of the outer edge formed by the second side 1704.

Figure 17 (c) shows a partially wound version of the counterflow membrane module 3 of the present invention configured as a spiral-wound module. Figure 17(d) shows a cross-section of a wound version of the counterflow membrane module 3 of the present invention configured as a spiral-wound module.

The housing is not shown. The conduit 1709 is a central tube 1709 extending along the first direction 1750. The membrane sheets 1700 are wound around the central tube 1709 so as to define a spiral perpendicular to the first direction 1750, such that the first side 1703 of the one or more membrane sheet(s) is closer to the central tube 1709 than the second side 1704.

In use (i.e. with the membrane sheets 1700 wrapped around the conduit/central tube 1709 to form a spiral), feed fluid enters the module 3 at the first end 1701 and passes along the first major surface i.e. within the space defined by the feed spacer 1740 between the membrane sheets from the first end 1701 to the second end 1702 as indicated by dashed arrows 200. The feed fluid is separated across each membrane sheet 1700 and the portion that passes through the membrane sheet 1700 is the permeate fluid. The permeate fluid moves along the second major surface of each membrane sheet 1700 (i.e. within the space defined by the permeate spacer 1760), which is opposite from the first major surface of the membrane sheet 1700. The direction of its movement is shown by arrow 220 in Figure 17(b). Residue fluid passes along the first major surface of each membrane sheet 1700 and so follows the same path as arrow 200. In other words, the residue fluid passes along the same major surface as the feed fluid and the permeate fluid passes along on the opposite major surface. The flow of the second part of the permeate fluid, as shown by the arrows 220 is from the second portion to the permeate section 1708 and so is in the direction from the second end 1702 to the first end 1701 (i.e. opposite from the first direction 1750). Therefore, the second part of the permeate fluid dilutes the first part of the permeate fluid. This dilution increases the driving force for separation across the membrane sheet 1700. In Figure 17(b) a portion of the membrane sheet has been hidden from view to indicate the feed spacer 1740 below. As shown in this Figure, the feed spacers 1740 and the permeate spacers 1760 have approximately the same length and width as the membrane sheets 1700.

A sectional view of the spiral-wound counterflow module from the first end 1701 is shown in Figure 17(c). As can be seen from this figure, the feed spacers 1740 provide the space defining the fluid path for movement of the feed fluid and residue fluid along the first major surface of the membrane sheets 1700. The permeate spacers 1760 provide the space defining the fluid path for movement of the permeate fluid along the second major surface of the membrane sheets 1700. The arrows indicate the movement of permeate fluid along the membrane sheet and spirally inwards towards and into the central tube 1709.

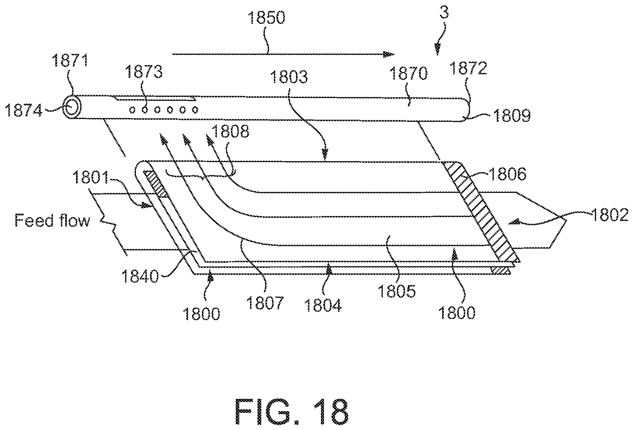

Figure 18 shows one alternative configuration for a membrane sheet 1800 that may be used in a spiral-wound module. Figure 18 is similar to Figure 17(a) and so the description of Figure 17 equally applies to Figure 18. Figure 18 differs from Figure 17(a) as the second portion 1706 extends along the second end 1702 of the membrane sheet 1700. As discussed above, only a portion of the conduit (central tube) 1709, about one-third to one-half of the length, comprises openings/apertures along its curved surface while the remaining length does not comprises openings/apertures (i.e. is not perforated). The length/axial range of the conduit 1709 over which the openings/apertures are provided is the same as the permeate area 1708. The length/axial range of the conduit 1709 not containing openings/apertures (i.e. not perforated) is the remainder of the length of the membrane sheet in the first direction 1750. As shown in Figure 18, the portion of the membrane sheet 1700 closer to the second end 1702 has a counterflow permeate fluid pattern, while proximal to the first end, the permeate fluid has a predominantly crossflow permeate fluid pattern.

Figure 17(a) shows a membrane sheet 1700 wrapped around the feed spacer 1740. The membrane sheet 1700 wrapped around the feed spacer 1740 may be considered to be a membrane envelope. In industrial spiral wound modules, many membrane envelopes are used as a shown in Figure 18. In the production process, the conduit 1709 is rotated to wind the membrane sheets 1700 around the conduit 1709, and as it rotates sealant, such as epoxy glue is applied along the first ends 1701 and second ends 1702 of the second major surfaces of the membrane sheets 1700. Once the membrane sheets 1700 have been wound around the conduit 1709, the sealant is also applied along the second sides 1704 of the first major surfaces of the membrane sheets 1700. The sealant forms the seals that separate the flow path for the feed fluid from the flow path for the permeate fluid along the surfaces of the membrane sheet 1700. The sealant may also be applied to the first and second ends of the permeate spacers 1760 and the second sides of the feed and permeate spacers 1740, 1760. As best shown in Figure 17(b), the permeate spacer 1760, which forms the outer layer of the spiral wound module (shown in the bottom layer of the stack in Figure 17(b)) is longer than the other permeate spacers 1760 and feed spacers 1740 in the first direction and is attached to the conduit 1709. As the conduit 1709 is rotated, the membrane sheets 1700, feed spacers 1740 and permeate spacers 1760 are wound around the conduit 1709. The permeate spacer 1760 that forms the inner layer of the spiral wound module (shown on the top of the stack in Figure 17(b)) is sealed to the permeate spacer 1760 forming the outer layer.

The magnitude of the sweep effect produced in the modules described is proportional to the relative area and permeances of the second portion and the first portion. In general, the second portion will represent 1 to 15% of the total area of the membrane sheet, and the permeance of the major component through the second portion will be 5 to 20-fold higher than the first portion. Normally this means the second portion of the membrane sheet has a lower selectivity than the first portion of the membrane sheet. Nonetheless, a partial separation is performed and so the result is that the sweep flow produced by permeation through the second portion of the membrane sheet as shown in our device produces a better result than using an external flow of residue fluid. Designers of these types of equipment will choose the optimum sweep area depending on the permeation characteristics of the two membrane areas and the requirements of their processes.

The improvement obtained with the Figure 18 design for a typical separation is shown in Tables 1 and 2 below.

Table 1 includes data for the membrane sheet configured as shown in Figure 18 and comparative data for membrane sheets configured as simple crossflow and simple counterflow designs (i.e. without the second portion 1806).

The separation is for a $1000 m^3$/h gas stream containing 15% $CO_2$ at 1 bar. The total membrane area is adjusted until the residue gas contains 3% $CO_2$. The permeate pressure is maintained at 0.2 bar. The sweep flow through the second portion is set at 5% of the residue gas. The second portion has a selectivity of 1.0.

As discussed above it is difficult to apply internal sweep to counterflow membrane modules having membrane sheets, such as plate-and-frame modules or spiral-wound modules due to construction and operation difficulties. Nevertheless, the counterflow module configured as shown in Figure 18 generates sweep flow internally and can be incorporated into a spiral-wound module. As shown in Figure 15, membrane sheets of the same configuration can also be incorporated in plate-and-frame modules. Accordingly, the present invention provides counterflow membrane modules that generate sweep internally and can be configured as plate-and-frame or spiral wound modules. As shown in Table 1, surprisingly, for the counterflow design of the present invention, the membrane area required for the separation is less than half the simple crossflow configuration but the concentration of $CO_2$ in the permeate gas is much greater. The membrane sheet still produces 6% $CO_2$ in the treated gas. The counterflow design of the present invention is also more efficient than the simple counterflow design, since the membrane area required for the separation can be reduced by 630 $m^2$ but a similar concentration of $CO_2$ in the permeate gas is achieved. The membrane still produces 6% CO2 in the treated gas. The counterflow modules of the present invention are therefore more efficient than the simple crossflow and simple counterflow membrane modules and allow smaller membrane sheets to be used while achieving a better separation.

Table 1

| | Total membrane area required ($m^2$) | Concentration of $CO_2$ in permeate (%) |
|---|---|---|
| Simple Counterflow | 1760 | 42.4 |
| Counterflow, Figure 18 design | 1130 | 41.7 |
| Simple Crossflow | 2500 | 33.2 |

Table 2 includes data for the membrane sheet configured as shown in Figure 18 and comparative data for membrane sheets configured as simple crossflow and simple counterflow designs (i.e. without the second portion 1806).

For the data in Table 2, the separation is for $CO_2$ from natural gas. The target of the process is to produce a gas containing 2% $CO_2$. Typically a multi-stage separation process would be performed. The data shown in Table 2 is for the first stage of the process. The feed gas is 10 million scfd gas stream containing 20% $CO_2$ at a pressure of 30 bar. The total membrane area is adjusted until the residue gas contains 2% $CO_2$. The permeate pressure is maintained at 5 bar. For the simple counterflow and the simple crossflow membrane sheets, the membrane sheets are formed of a cellulose acetate $CO_2$ selective membrane having a $CO_2$ permeance of 33 x $10^{-10}$ mol/($m^2$sPa) (10 gpu). For the membrane sheet 1800 configured as shown in Figure 18, the first portion 1805 of the membrane sheet 1800 is formed of a cellulose acetate $CO_2$ selective membrane having a $CO_2$ permeance of 670 x $10^{-10}$ mol/($m^2$sPa) (200 gpu) and a methane permeance of 33 x $10^{-10}$ mol/($m^2$sPa) (10 gpu) (i.e. the same material as the simple counterflow and simple crossflow membrane sheets). The second portion 1806 of the membrane sheet 1800 is formed of a silicone base material with a $CO_2$ permeance of 2700 x $10^{-10}$ mol/($m^2$sPa) (800 gpu) and a methane permeance of 330 x $10^{-10}$ mol/($m^2$sPa) (100 gpu). The methane permeance of the second portion 1806 is therefore 10 fold higher than the methane permeance of the first portion 1805.

As shown in the data in Table 2 below, the permeate $CO_2$ concentration is significantly increased to 45.7% for the counterflow design of the present invention compared to a simple crossflow design and the total area of the membrane sheet can be reduced by 1370 m$^2$ but the membrane still produces 2% $CO_2$ in the treated gas.

The inclusion of the second portion 1806 according to the present invention also leads to significant improvements over the simple counterflow design as shown by the data in Table 2. By providing the counterflow membrane sheet of the present invention, the membrane area can be reduced by 880 m$^2$ while still maintaining a similar permeate $CO_2$ concentration.

If the area of the second portion 1806 is increased from 3% to 7.3% or 12.8% of the total membrane area, then the membrane area can be reduced further while still maintaining 43.5 and 41.7% $CO_2$ permeate, respectively and still producing 2% $CO_2$ in the treated gas. Indeed, when the area of second portion is 7.3% of the total membrane area, the total membrane area can be reduced to less than half of the total membrane area required by the simple crossflow design and 1480 m$^2$ less than the total membrane area required by the simple counterflow design. The permeate $CO^2$ concentration is still significantly higher than the simple crossflow design and similar to the simple counterflow design.

When the area of second portion is increased to 12.8% of the total membrane area, the total membrane area can be 3260 m$^2$ less than the simple crossflow design and 1890 m$^2$ less than the simple counterflow design for the same separation. The permeate $CO_2$ concentration is still significantly higher than the simple crossflow design and similar to the simple counterflow design.

Therefore, by providing the second portion 1806, which generates a sweep effect, the separation process is more efficient and consequently the total area of the membrane sheet can be reduced by approximately half.

Although the data of Tables 1 and 2 is in respect of the configuration shown in Figure 18, it will be appreciated that the advantages demonstrated by this data equally apply to the other configurations for the membrane sheet of the present invention described herein.

Table 2

| | First Portion Area (m$^2$) | Second Portion Area (m$^2$) | Total Membrane Area (m$^2$) | Permeate $CO_2$ (%) | Area of second portion as fraction of total area (%) |
|---|---|---|---|---|---|
| Simple Crossflow | 5600 | 0 | 5600 | 37.9 | 0 |
| Simple Counterflow | 4230 | 0 | 4230 | 46.1 | 0 |
| Counterflow, Figure 18 design | 3250 | 100 | 3350 | 45.7 | 3.0 |
| Counterflow, Figure 18 design | 2550 | 200 | 2750 | 43.5 | 7.3 |
| Counterflow, Figure 18 design | 2040 | 300 | 2340 | 41.7 | 12.8 |

It will be clear from the above that the process of the invention can be applied to a number of pervaporation and gas separation applications. By way of example, some of these are listed in Table 3 below.

Table 3

| Feed Fluid | | First Portion Material | | Second Portion Material | |
|---|---|---|---|---|---|
| Minor Component | Major Component | Name | Major Component Permeance [x 10$^{-10}$ mol/(m$^2$sPa)] (gpu) | Name | Major Component Permeance [x 10$^{-10}$ mol/(m$^2$sPa)] (gpu) |
| Gas Separation | | | | | |
| H2 | $CH_4$ | Polyimide | 17 (5) | PDMS | 170 (50) |
| H2 | $CO_2$ | PBI | 17 (5) | PDMS | 170 (50) |
| $CO_2$ | H2 | Polaris | 330 (100) | PDMS | 1700 (500) |
| C2-C5 hydrocarbons | $CH_4$ | PDMS | 330 (100) | Polaris 300 | 1000 (300) |
| Pervaporation | | | | | |
| $H_2O$ | Isopropanol | PVA | 33 (10) | PDMS | 670 (200) |
| H2O | Acrylonitrile | PVA | 33 (10) | PDMS | 670 (200) |

(continued)

| Pervaporation | | | | | |
|---|---|---|---|---|---|
| Toluene | Methyl Cyclo-hexane | Hyflon AD60 | 330 (100) | Pebax 1657 | 670 (200) |
| Ethyl Acetate | $H_2O$ | PDMS | 330 (100) | Pebax 1657 | 3,300(1,000) |

In particular, the separation process performed using the counterflow membrane module of the present invention may be: the separation of $CO_2$ from nitrogen, the separation of light hydrocarbons C3 to C5 from nitrogen or methane, the separation of $CO_2$ from hydrogen, the separation of hydrogen from methane, the separation process of $CO_2$ from methane, the separation of water from ethanol by pervaporation, or the separation of aromatics from aliphatic hydrocarbons by pervaporation.

The membrane module of the present invention may be used in a separation process operating at least in part within the pressure ratio limited region.

INFORMATION USEFUL FOR UNDERSTANDING THE INVENTION

The three general membrane module configurations currently known are shown in Figure 1. In the designs shown, the feed fluid flows from left to right along the membrane surface. A portion of the feed fluid permeates through the membrane forming the permeate fluid. The configurations differ in the flow direction of the permeate fluid relative to the feed fluid as the fluid moves to the outlet. In a counterflow module, the permeate fluid flows right to left opposite to the flow of feed fluid on the other side of the membrane. In a crossflow module, the permeate fluid flows at right angles to the feed fluid flow. In a coflow module, the permeate fluid flows in the same direction as the feed fluid.

In general, when using the same membrane, the separation obtained and the membrane area required to perform the separation are different for the three configurations in the order; counterflow better than crossflow better than coflow. In many applications, the separation performance obtained with the same membrane for the three different module designs is small, but in others, especially when the membrane separation is pressure ratio limited, as described below, the difference is significant. This result suggests that counterflow modules are a preferred module configuration. However, counterflow modules are mechanically more difficult to make than crossflow modules. Various work arounds to this problem have been described but are not widely adopted, and so crossflow modules are used in many, perhaps a majority, of gas separation and pervaporation applications. Coflow modules are rarely used. These issues are discussed in many membrane texts, for example, chapters 3, 4, 8 and 9 of Baker, R.W., Membrane Technology and Applications, 3rd Edition, (2012), John Wiley and Sons.

In the discussion that follows, we will for the most part illustrate our invention for simplicity by using gas permeation examples. However, the improved module of this invention is equally applicable to pervaporation as we will show later.

The difference in the separation performance of the three module configurations shown in Figure 1 is a driving force issue. The flow of components on the feed side of membrane to the permeate side of the membrane side is proportional to the difference in partial pressure driving force of each component across the membrane. The partial pressure on the feed side of the membrane is $n_{io}p_o$ (molar concentration $n_{io}$, pressure $p_o$) and on the permeate side of the membrane it is $n_{i\ell}p_\ell$ (molar concentration $n_{it}$, pressure $p_\ell$). And thus, the partial pressure driving force is given by:

$$\Delta p_i = n_{i_o} p_o - n_{i_\ell} p_\ell$$

In the absence of all other effects, the molar concentration at any point on the permeate side of the membrane is determined by the concentration of gas permeating the membrane. But, depending on the gas flow configuration in the permeate channel, the permeating gas concentration can be changed by mixing with gas from other parts of the permeate channel.

In the module configurations shown in Figure 1, the concentration of the most permeable components decreases as the gas passes left to right through the module. This means the concentration of the most permeable components of the gas permeating the membrane also decreases left to right across the membrane. In a counterflow module, the flow of permeate gas, right to left, has a beneficial effect on permeation because the gas mixing with the permeate gas dilutes the incoming permeate, reducing the concentration of the most permeable component and so increasing the driving force across the membrane. In a coflow module, permeate gas flow has the opposite effect and increases the permeate concentration when mixed with the incoming permeate. This decreases the driving force for permeation across the membrane and the flux falls. In a crossflow module, the permeate gas flow has the same concentration as the incoming permeate and mixing does not affect the membrane separation.

The magnitude of the difference between the different module configurations is a function of several factors, including the membrane selectivity ($\alpha_{i/j}$) that is, the ratio of the permeability of components i and j;

$$\alpha_{i/j} = \frac{P_i}{P_j}$$

(2)

As well as the pressure ratio across the membrane written as:

$$\theta = \frac{p_o}{p_\ell}$$

and the molar concentration of the more permeable component on the feed side of the membrane, $n_{io}$.

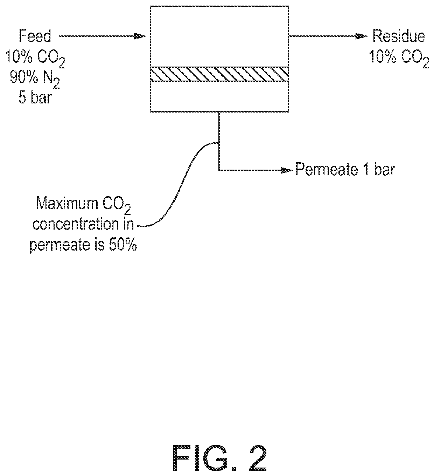

By way of example to illustrate these effects, consider the separation illustrated in Figure 2. In this example, only a very small amount of the permeable gas $CO_2$ is removed from the feed as it moves left to right across the membrane. This means the concentration of $CO_2$ on the permeate side of the membrane is everywhere about the same, and the difference between counterflow, crossflow and coflow is very small. As described earlier, membrane permeation only occurs if the partial pressure of the permeate side of the membrane is less than the feed, that is

$$n_{i_\ell} p_\ell \leq n_{i_o} p_o$$

(3)

This inequality can be rearranged to:

$$\frac{n_{i_\ell}}{n_{i_o}} \leq \frac{p_o}{p_\ell}$$

(4)

which shows that the enrichment of the permeating component ($CO_2$) is always less than the pressure ratio (feed pressure/permeate pressure). It also follows that the concentration of the permeating component ($CO_2$) can never be more than the expression:

$$n_{i_\ell} \leq n_{i_o} \times \frac{p_o}{p_\ell} = n_{i_\ell}^{max}$$

(5)

For the example in Figure 2, this means that $n_{i\ell}$ cannot be greater than 50% $CO_2$ ($n_{io}$ = 10% $CO_2$ and

$$\frac{p_o}{p_\ell} = \frac{5\,bar}{1\,bar}$$

) no matter how selective the membrane.. This result has several implications, first at least half of the permeate must be the slow component ($N_2$) and it is permeation of the slow component that determines the membrane area required to treat a specific amount of feed fluid. Also, as the selectivity of the membrane increases, the amount of membrane area required to permeate the same amount of $CO_2$ increases. In the limit of infinite selectivity, no slow component permeates, hence infinite membrane area is required.

A membrane process is considered to be well within the pressure ratio limited region if the maximum permeate concentration $n_{i_\ell}^{max}$ given by equation 5 is less than 100%. In this region, the effect of module configuration is generally noticeable. The differences are even more significant if, in addition, the membrane selectivity is larger than the pressure ratio, and will be even more significant if the membrane selectivity is more than two or three times larger than the pressure ratio. When this is the case, a significant difference between counterflow, crossflow and coflow membrane modules is produced. Some of the issues of pressure ratio and its effect on membrane separation are discussed in detail by Huang, et al., Journal of Membrane Science, 463, 33 (2014).

One way to mitigate the pressure ratio limitation described above is to use a membrane sweep. These devices are described in a number of standard texts and patents. Figure 3 shows the design of various external sweep separation processes applied to counterflow membrane modules to improve the modules' performance. Consider the processes shown in Figure 3a first. Feed fluid, which may be a gas or liquid (301) passes along the surface of a selective membrane (306) while a sweep fluid (304), generally 2-10% of the feed flow, is passed along the permeate side of the membrane. A driving force for permeation is generated in part by the difference in pressure across the membrane, but also because of concentration (partial pressure) difference generated by the sweep. For this process to be effective, it is necessary that the flow rate of the sweep fluid (304) be carefully controlled. Processes employing this type of external sweep fluid are described, for example, in U.S. Patents 4,824,443; 6,515,725; 7,153,343 and 8,246,718

An alternative type of external sweep process called a residue sweep process is illustrated in Figures 3b and 3c. In the case of the gas separation module shown in Figure 3b, a portion of the treated residue fluid (318) is expanded across a valve (320) and is introduced to the permeate side of the module (325) at the residue end. The change in separation depends on how much of the residue fluid (321) is used as a sweep. Typically about 2 to 10% of the residue fluid is used. The sweep flow dilutes the permeate fluid and increases the flow of the permeate component of the feed along the membrane. The flux through the membrane increases although the permeate concentration falls. Pervaporation sweep, shown in Figure 3c, is similar except the residue stream (309) has to be vaporized by evaporator (313) before it can be used as sweep. Processes employing this type of external sweep are described, for example, in U.S. Patents 5,444,540 and 5,205,842.

A final type of external sweep fluid generation method that has occasionally been used is shown in Figure 3d. Such a device has been described, for example, in U.S. Patent 5,383,956. In this device, the control valve (320) shown in Figure 3b, or the control valve (311) to evaporator (313) shown in Figure 3c are replaced with a second membrane unit (320). The permeate fluid from the unit (322) is then sent to the main separation module (318) to produce a counterflow sweep effort on the permeate side of the module.

All of the process designs shown in Figure 3 use a sweep fluid stream generated externally to the module. The fluid is then delivered to the permeate side of the membrane at the residue end of the module to produce a counterflow sweep effect. One of the problems with this type of arrangement is the piping and valves needed to introduce a controlled flow of fluid into the module.

A number of attempts have been made to overcome the shortcomings of external sweep devices. Two such attempts are illustrated in Figures 4 and 5 from U.S. Patent 4,687,578 to Stookey and U.S. Patent 6,740,140 to Giglia, et al. The '578 device illustrated in Figure 4 is a counterflow hollow fiber module device in which one end of the fiber is not coated with a selective membrane layer. An enlarged view of one fiber is shown in Figure 4a. Most of the fiber is coated with a selective layer (401) but the end portion of the fiber (403) is not coated. This portion of the fiber has no selectivity but will have a much higher permeance than the main portion of the fiber, and so the feed fluid that permeates here (409) can act as a flow of residue sweep fluid (409). In this way, an internally generated counterflow of residue sweep fluid is produced.

A similar device is shown in Figure 5, taken from U.S. Patent 6,740,140 to Giglia, et al. As with the '578 patent device, the base module is a counterflow hollow fiber module with shell-side feed. The feed fluid (502) enters at one end of the module and flows left to right in the spaces between the hollow fibers (505). A residue pipe extends through the module terminating just short of the right-hand end of the module (509). As the feed fluid flows between the hollow fibers, a portion permeates the fiber membrane and travels inside the fiber left to right (countercurrent to the feed) leaving through the permeate port (503). Most of the feed fluid that does not permeate the hollow fiber membrane is removed through holes in the residue collection pipe (512). The end of the residue collection pipe is sealed with a plug perforated by a small orifice (511). A portion of the treated residue fluid leaks through this orifice and can then enter the open ends of the fibers (514), thus creating the desired residue fluid counterflow sweep effect. The use of internal sweep devices has been limited to non-counterflow, hollow fiber devices of the type described in the '140 and '578 patents. Internal sweep has not been applied to flat sheet spiral-wound or plate-and-frame modules of the type described in this application. We will show that, by using the design described in this application, it is possible to obtain the advantages of internally generated sweep in these devices too.

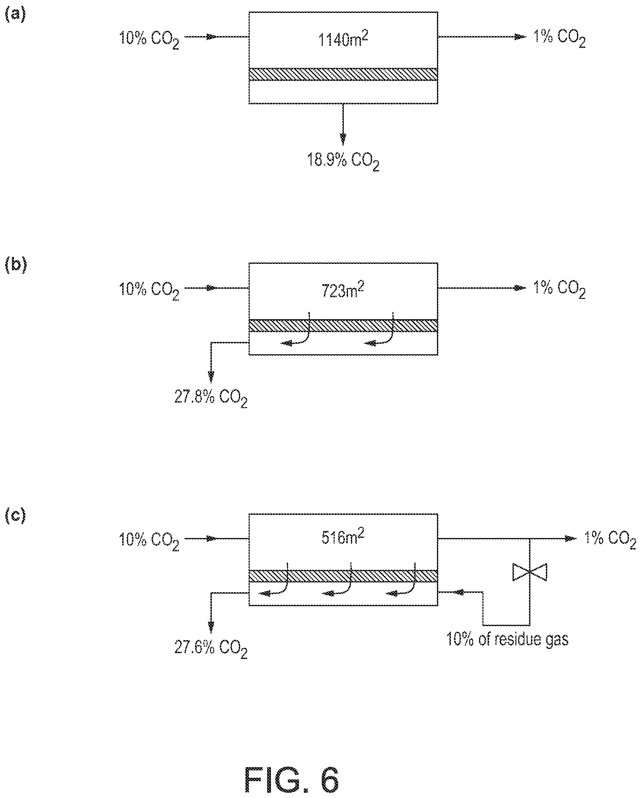

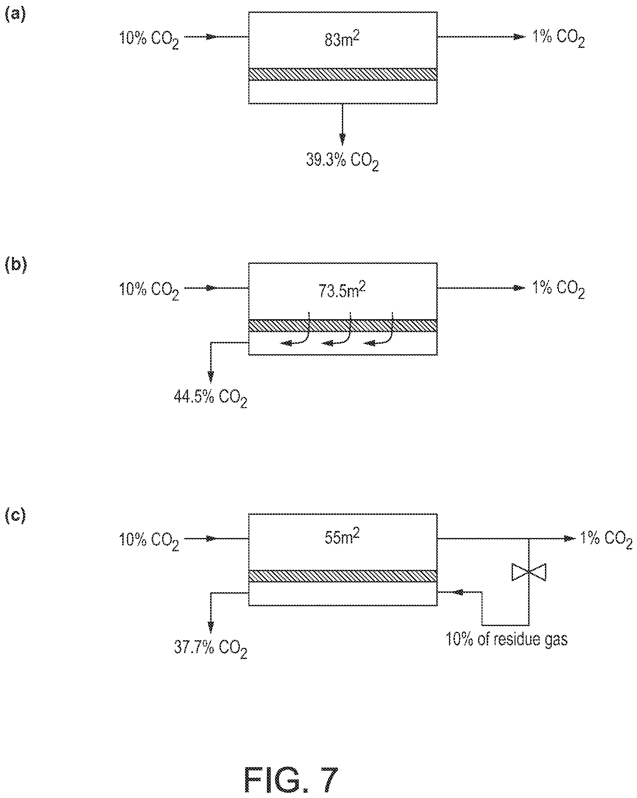

Two concrete sets of examples illustrating the beneficial effect of a controlled sweep with counterflow modules are shown in Figures 6 and 7. In the Figure 6 examples, a 1000 std $m^3/h$ feed fluid at 5 bar containing 10% $CO_2$ is treated with crossflow, counterflow and coflow modules with 10% external sweep. The pressure ratio is 5 so the entire membrane module is in the pressure ratio limited region. Also, the membrane has a $CO_2/N_2$ selectivity of 30. This is 6 times larger than the pressure ratio, so counterflow and sweep are expected to have a substantial effect, and this is the case. The counterflow module needs 36% less membrane area to achieve the same $CO_2$ removal, and produces a significantly higher concentration permeate than the crossflow module. Using a counterflow module with an additional 10% sweep from the residue fluid stream reduces the permeate concentration but produces a further 18% reduction in the area needed to do the separation than the crossflow module.

In the Figure 7 example, the same set of examples is shown, with the difference being that the feed pressure is set at 20 bar and so the pressure ratio is 20. As a consequence, although the counterflow and sweep examples are better than the crossflow module results, the effect is less significant. This is because at a pressure ratio of 20 and a feed concentration of 10%, part of the membrane module at the feed end is outside of the pressure ratio limited region. At the feed end of the module at a pressure ratio of 20, Equation 5 shows the maximum theoretical value $CO_2$ in the permeate is 200%, so the feed end of the module is well outside the pressure ratio limited area. At the residue end of the module, the feed fluid concentration is only 1% $CO_2$, so the maximum concentration in the permeate given by Equation 5 is then 20% and so this portion of the module is in the pressure ratio limited region. The module transitions into the pressure ratio controlled region at the point in the module when the feed fluid concentration is 5% $CO_2$. Because the module is only partially in the pressure ratio limited region, the counterflow module now only uses 11% less membrane area and the permeate concentration is only slightly more than the crossflow result. The counterflow sweep module also uses less area, but now the permeate $CO_2$ concentration is lower than crossflow results. This is because under conditions of this test, 10% sweep is too large. Reducing the sweep to 5% produces a better result. The required area to do the separation is then 60 m², a 16% reduction in area compared to simple counterflow, and the permeate concentration is 40.8% $CO_2$, less than the counterflow example but still better than the crossflow case.

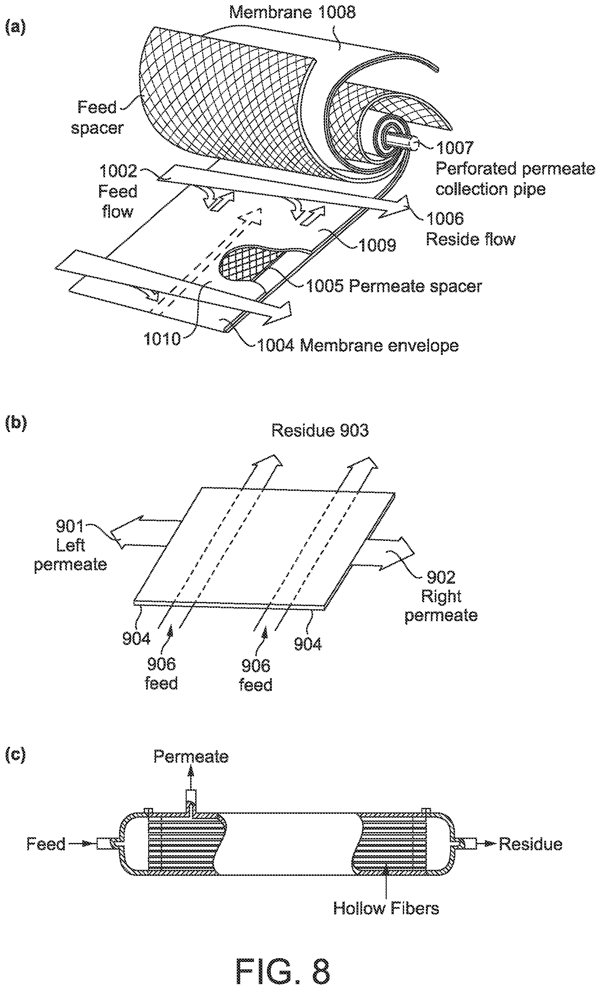

Gas separation and pervaporation processes that could benefit from sweep operation often use crossflow modules, which are mechanically easier to build and operate, especially for flat sheet membranes formed into spiral-wound and plate-and-frame module geometries. However, almost all of the spiral-wound and plate-and-frame modules in current use are of the crossflow type shown in Figure 8, while most of the hollow fiber modules used are of the counterflow type.

Creating an external sweep effect with spiral-wound or plate-and-frame modules is possible, but requires significant modification to the module's construction. The internal sweep process as described in our invention is much easier to apply and produces a better result. Also, all modules using an external sweep regime require good control of the sweep flow rate for reliable operation. The controls that can achieve this level of precision with external sweep devices are not cheap and must be fitted on to every module where sweep will be used. In an industrial plant, this may be tens to hundreds of control units, and the failure of even one unit could lead to a large uncontrolled leak of fluid from the residue to the permeate stream, affecting the operation of the whole plant.

Another problem with many of the sweep processes described hitherto is that the sweep is produced by expanding the residue gas or liquid from the module through a valve as shown in Figure 3a and 3b. This process essentially throws away an extra potential separation step. As we will show, a better approach is to incorporate a partial separation into the sweep-generating process. This is one of the innovations of our process.

**Claims**

1. A counterflow membrane module (1, 3) configured to separate feed fluid comprising a minor component and a major component into permeate fluid and residue fluid, wherein the residue fluid has a lower concentration of the minor component than the feed fluid and the permeate fluid has a higher concentration of the minor component than the feed fluid, the module comprising:

   a housing (20) having a first end (21) and a second end (22), wherein the second end (22) is spaced apart from the first end (21) along a first direction (1650);
   one or more membrane sheet(s) (1600) between the first and second ends (12, 22) of the housing (20), wherein each membrane sheet (1600) comprises a first end (1601) and a second end (1602), wherein the second end (1602) is spaced apart from the first end (1601) along the first direction (1650), wherein each membrane sheet (1600) comprises first and second sides (1603, 1604) extending between the first and second ends (1601, 1602), wherein the first side (1603) is spaced apart from the second side (1604) along a second direction, wherein the second direction is transverse to the first direction (1650), wherein each membrane sheet (1600) comprises a first major surface and a second major surface, wherein the second major surface is opposite from the first major surface, wherein each membrane sheet (1600) is configured to separate the feed fluid into the residue fluid and the permeate fluid,
   wherein the membrane module (1, 3) is configured such that the feed fluid and the residue fluid flow along the first major surface of each membrane sheet (1600) in the first direction (1650) but do not flow along the second major surface of each membrane sheet (1600) and the permeate fluid flows along the second major surface of each membrane sheet (1600) but does not flow along the first major surface of each membrane sheet (1600);

the membrane module (1, 3) further comprising:

an inlet (25) at the first end (21) of the housing (20), wherein the inlet (25) is in fluid communication with the first end (1601) of the first major surface of each membrane sheet (1600) and is configured to receive the feed fluid such that it flows along the first major surface of each membrane sheet (1600);

an outlet (26) at the second end (22) of the housing, wherein the outlet (26) is in fluid communication with the second end (1602) of the first major surface of each membrane sheet (1600) and is configured to receive and output the residue fluid separated from the feed fluid;

a conduit (1609) adjacent to a permeate section (1608) along the first side (1603) of the second major surface of the membrane sheet (1600), wherein the permeate section (1608) is for enabling permeate fluid to pass into the conduit (1609), wherein the conduit (1609) is configured to receive and output the permeate fluid separated from the feed fluid;

wherein at least one of the one or more membrane sheet(s) (1600) comprises a first portion (1605) and a second portion (1606) such that separation of the feed fluid across the first portion (1605) generates a first part of the permeate fluid and separation across the second portion (1606) generates a second part of the permeate fluid,

wherein the second portion (1606) of the membrane sheet (1600) has a greater permeance for the major component than the first portion (1605) such that the second part of the permeate fluid has a higher concentration of the major component than the first part of the permeate fluid;

wherein the at least one of the one or more membrane sheet(s) (1600) comprises a third portion (1610) configured to direct flow of permeate towards the permeate section (1608), wherein the third portion (1610):

extends along the second major surface of the one or more membrane sheets (1600);
is offset from the permeate section (1608) along the first direction (1650) such that the third portion (1610) is closer to the second end (1602) than the permeate section (1608);
has reduced permeance for the major component compared to the first portion (1605); and
extends along the first side (1603) of the one or more membrane sheets (1600);

wherein the second portion (1606) is in fluid communication with the feed fluid flowing along the first major surface of the membrane sheet (1600) and is offset in the first direction (1650) from the permeate section (1608) of the membrane sheet (1600) such that it is closer to the second end (1602) than the permeate section (1608), thereby causing the second part of the permeate fluid to flow towards the first end (1601) such that the second part of the permeate fluid mixes with the first part of the permeate fluid thereby reducing the concentration of the minor component in the first part of the permeate fluid.

2. The membrane module (1, 3) of claim 1, wherein the conduit (1609) is aligned with the permeate section (1608).

3. The membrane module (1) of claim 1 or claim 2, wherein (i) the module (1) further comprises a second conduit (1609') and each membrane (1600) comprises a second permeate section (1608'), wherein the second permeate section (1608') is on the second side (1604), wherein the second permeate section (1608') is fluidly connected to the second conduit (1609'), wherein the second conduit (1609') is configured to receive and output the permeate fluid separated from the feed fluid; and/or (ii) wherein the membrane module (1) is a plate-and-frame module (1).

4. The membrane module (3) of claim 1 or claim 2, wherein the counterflow membrane module (3) is spiral-wound,

wherein the conduit (1709) is a central tube (1709) extending along the first direction (1750),
wherein the one or more membrane sheet(s) (1700) are wound around the central tube (1709) so as to define a spiral perpendicular to the first direction (1750), such that the first side (1703) of the one or more membrane sheet(s) (1700) is closer to the central tube (1709) than the second side (1704),
wherein the central tube (1709) comprises a cylindrical surface (1770) and first and second terminal ends (1771, 1772) defining a lumen therebetween,
wherein the central tube (1709) comprises one or more opening(s) (1773) in the cylindrical surface (1770), wherein the one or more opening(s) (1773) are configured to receive the permeate fluid separated from the feed fluid, wherein the one or more opening(s) (1773) are adjacent to the permeate section (1708) of the membrane (1700), wherein the one or more opening(s) (1773) are offset in the first direction (1750) from the second portion (1706) of the membrane sheet (1700) such that the one or more opening(s) (1773) are closer to the first end (1701) than the second portion (1706),
wherein the central tube (1709) further comprises an outlet (1774) configured to output the permeate fluid received by the one or more opening(s) (1703), wherein the outlet (1774) is in the first or second terminal ends (1771, 1772) of the central tube (1709),
optionally wherein the one or more opening(s) (1773) are spaced apart from each other along the first direction (1750).

5. The membrane module (1, 3) of any preceding claim, wherein the second portion (1606) of the membrane sheet (1600) extends along an outer edge of the one or more membrane sheet(s) (1600);

optionally wherein (i) the second portion (1606) extends along at least a portion of the second side (1602), wherein the second portion (1606) does not overlap the permeate section (1608) in the first direction (1650), preferably wherein the second portion (1606) extends along the first direction (1650); or (ii)
wherein the second portion (1606) extends along at least a portion of the second end (1602), preferably wherein the second portion (1606) extends along the first direction (1650).

6. The membrane module (1, 3) of any preceding claim, wherein (i) the permeate section (1608) extends along the first side (1603); and/or wherein (ii) the second portion (1606) extends in the second direction and/or along the edge of the second end (1602) of the one or more membrane sheet(s) (1600).

7. The membrane module (1, 3) of any preceding claim, wherein the third portion (1610) is substantially impermeable to the major component and minor component.

8. The membrane module (1, 3) of claim 7, further comprising a further the third portion (1610), wherein the further third portion (1610):

is offset from the permeate section (1608) along the first direction (1650) such that the further third portion (1610) is closer to the second end (1602) than the permeate section (1608);
has reduced permeance for the major component compared to the first portion (1605); and
extends along the second side (1604) of the membrane (1600).

9. The membrane module (1, 3) of any preceding claim, wherein the module (1, 3) further comprises:

one or more feed spacers (1740) configured to space apart the one or more membrane sheets (1700) wherein each feed spacer (1740) is for defining a fluid path for the flow of feed fluid and residue fluid to the outlet; and
one or more permeate spacers (1760) configured to space apart the one or more membrane sheets (1700), wherein each permeate spacer (1760) is for defining a fluid path for the flow of permeate fluid to the conduit (1709).

10. The membrane module (1, 3) of claim 9, wherein (i) a first membrane sheet of the one or more membrane sheets (1700) is arranged such that a feed spacer (1740) is adjacent to the first major surface of the first membrane sheet and a permeate spacer (1760) is adjacent to the second major surface of the first membrane sheet; and/or (ii) the membrane sheets (1700), the one or more feed spacers (1740) and the one or more permeate spacers (1760) are arranged in a stacked configuration, wherein each space between adjacent membrane sheets (1700) is defined by either a feed spacer (1740) or a permeate spacer (1760), wherein the membrane sheets (1700) are in alternating orientations such that the first major surface of each membrane sheet (1700) is in contact with a feed spacer (1740) and the second major surface of each membrane sheet (1700) is in contact with a permeate spacer (1760).

11. The membrane module (1, 3) of claim 9 or claim 10, wherein (i) adjacent membrane sheets (1700) spaced apart by a feed spacer (1740) are sealed along the first and second sides (1703, 1704) of their first major surface to fluidly seal the fluid path for the flow of feed fluid and residue fluid across the first major surfaces, wherein adjacent membrane sheets (1700) spaced apart by a permeate spacer (1760) are sealed along their first and second ends (1701, 1702) of their second major surface to fluidly seal the fluid path for the permeate fluid across the second major surfaces, preferably wherein the adjacent membrane sheets (1700) spaced apart by a permeate spacer (1760) are also sealed along the second sides (1704) of their second major surface; and/or (ii) each feed spacer (1740) is configured to direct the flow of fluid along the first direction (1750) and each permeate spacer (1760) is configured to direct the flow of fluid along the second direction.

12. The membrane module (1, 3) of any preceding claim, wherein (i) the area of the second portion (1606) is less than 20%, preferably less than 15%, more preferably less than 10%, most preferably less than 6% of the total area of the membrane sheet (1600); and/or (ii) the permeance of the second portion (1606) for the major component is more than two times, preferably at least ten times the permeance of the first portion (1605) for the major component.

13. The membrane module (1, 3) of claim 1, wherein the second portion (1606) forms a part of the second major surface; and/or wherein the second portion (1606) forms a part of the first major surface.

14. The membrane module (1, 3) of any preceding claim, configured such that a counterflow sweep effect is generated in the flow path for the permeate fluid by the second part of the permeate fluid.

15. A method of manufacturing the membrane sheets (1600) of the membrane module (1, 3) of any one of claims 1 to 14, the method comprising:

   providing a roll (901) of precursor sheets;
   coating a first area (907) of the roll of precursor sheets (901) with a first coating solution and coating a second area (908) of the roll of precursor sheets (901) with a second coating solution to form the roll of membrane sheets;
   separating the one or more roll(s) of membrane sheets into separate membrane sheets (1600), wherein the first portion (1605) of each membrane sheet is formed by the first area (907) of the roll of membrane sheets (901) and the second portion (1606) of each membrane sheet (1600) is formed by the second area (908) of the roll of membrane sheets (901), wherein the second portion (1606) of each membrane sheet (1600) has a higher permeance for the major component than the first portion; and
   forming the third portion (1610) on the second major surface of the one or more membrane sheets (1600).

16. The method of claim 15, wherein (i) the first area (907) and the second area (908) are adjacent to each other, preferably wherein the second area (908) is positioned between two first areas (907) such that in each membrane sheet (1600), the second portion (1606) is formed as a strip and the first portions (1605) are provided on either side of the second portion (1606); and/or wherein (ii) the step of coating the first area (907) and the step of coating the second area (906) are performed simultaneously.

17. The method of claim 15 or claim 16, wherein the method further comprises folding each membrane sheet (1200) around a feed spacer (1240) such that each membrane sheet (1200) forms a pair of membrane sheets (1200); or wherein the method further comprises sealing two membrane sheets (1200) together along their first side and positioning a feed spacer therebetween (1240).

18. The method of any one of claims 15 to 17, wherein the step of coating is performed by contacting the roll of membrane sheets (901) with first and second solutions in a coating container (906), wherein the coating container (906) has first and second sections (904, 905) fluidly separated from each other by separators (910, 911), the first section (905) containing the first coating solution and the second section (904) containing the second coating solution; optionally wherein (i) the second section of the coating container (906) is positioned between two first sections (905) of the coating container (906) and/or (ii) the method further comprises moving the position of the separators (910, 911) to adjust the position and size of the second portion (1606).

19. A method of using a counterflow membrane module (1, 3) to separate a minor component from a feed flow comprising a major component and a minor component, wherein the residue fluid has a lower concentration of the minor component than the feed fluid and the permeate fluid has a higher concentration of the minor component than the feed fluid, wherein the module (1, 3) comprises:

   a housing (20) having a first end (21) and a second end (22), wherein the second end (22) is spaced apart from the first end (21) along a first direction (1650),
   one or more membrane sheet(s) (1600) extending between the first and second ends (21, 22) of the housing (20), wherein each membrane sheet (1600) comprises a first end (1601) and a second end (1602), wherein the second end (1602) is spaced apart from the first end (1601) along the first direction (1650), wherein each membrane sheet (1600) comprises first and second sides (1603, 1604) extending between the first and second ends (1601, 1602), wherein the first side (1603) is spaced apart from the second side (1604) along a second direction, wherein the second direction is transverse to the first direction (1650), wherein each membrane sheet (1600) comprises a first major surface and a second major surface, wherein the second major surface is opposite from the first major surface,
   an inlet (25) at the first end (21) of the housing (20), wherein the inlet (25) is in fluid communication with the first end (1601) of the first major surface of each membrane sheet (1600);
   an outlet (26) at the second end (22) of the housing (20), wherein the outlet (26) is in fluid communication with the second end (1602) of the first major surface of each membrane sheet (1600); and

a conduit (1609) adjacent to a permeate section (1608) along the first side (1603) of the second major surface of the membrane sheet (1600);

wherein at least one of the one or more membrane sheet(s) (1600) comprises a first portion (1605) and a second portion (1606);

wherein the at least one of the one or more membrane sheet(s) (1600) comprises a third portion (1610) which:

extends along the second major surface of the one or more membrane sheets (1600);

is offset from the permeate section (1608) along the first direction (1650) such that the third portion (1610) is closer to the second end (1602) than the permeate section (1608);

has reduced permeance for the major component compared to the first portion (1605); and

extends along the first side (1603) of the membrane (1600);

the method comprising:

delivering a feed fluid comprising the major component and the minor component via the inlet (25) to the first major surface of each membrane sheet (1600) such that it flows along the first major surface of each membrane sheet in the first direction (1650);

separating the feed fluid across each membrane sheet (1600) into the permeate fluid and the residue fluid such that the residue fluid flows along the first major surface in the first direction (1650) to the outlet (26) and the permeate fluid flows along the second major surface to the permeate section (1608) and then into the conduit (1609);

wherein the membrane module (1, 3) is configured such that the feed fluid and the residue fluid flow along the first major surface of each membrane sheet (1600) in the first direction (1650) but do not flow along the second major surface of each membrane sheet (1600) and the permeate fluid flows along the second major surface of each membrane sheet (1600) but does not flow along the first major surface of each membrane sheet (1600);

wherein the step of separating comprises separating the feed fluid across the first portion (1605) of the membrane sheet (1600) to generate a first part of the permeate fluid and separating the feed fluid across the second portion (1606) of the membrane sheet to generate a second part of the permeate fluid, wherein the second portion (1606) of the membrane sheet has a greater permeance for the major component than the first portion (1605) such that the second part of the permeate fluid has a higher concentration of the major component than the first part of the permeate fluid;

wherein the flow of permeate is directed towards the permeate section (1608) by the third portion (1610);

wherein the second portion (1606) is in fluid communication with the feed fluid flowing along the first major surface of the membrane sheet (1600) and is offset in the first direction (1650) from the permeate section (1608) of the membrane sheet (1600) such that it is closer to the second end (1602) than the permeate section (1608), thereby causing the second part of the permeate fluid to flow towards the first end (1601) such that the second part of the permeate fluid mixes with the first part of the permeate fluid thereby reducing the concentration of the minor component in the first part of the permeate fluid;

wherein the method further comprises outputting the residue fluid from the module (1, 3) via the outlet (26) and outputting the permeate fluid from the module (1, 3) via the conduit (1609).

20. The method of claim 19, wherein the minor component is carbon dioxide, and the major component is methane or nitrogen.

21. The method of claim 19, wherein the counterflow membrane module (1, 3) is used for pervaporation and:
the minor component is water, and the major component is ethanol; or the minor component is aromatics, and the major component is aliphatic hydrocarbons.

**Patentansprüche**

1. Gegenstrom-Membranmodul (1, 3), das konfiguriert ist, um ein Zufuhrfluid, das eine Nebenkomponente und eine Hauptkomponente umfasst, in ein Permeatfluid und ein Restfluid zu trennen, wobei das Restfluid eine geringere Konzentration der Nebenkomponente aufweist als das Zufuhrfluid, und das Permeatfluid eine höhere Konzentration der Nebenkomponente aufweist als das Zufuhrfluid, wobei das Modul umfasst:

ein Gehäuse (20) mit einem ersten Ende (21) und einem zweiten Ende (22), wobei das zweite Ende (22) in einer ersten Richtung (1650) von dem ersten Ende (21) beabstandet ist,

eine oder mehrere Membranlage(n) (1600) zwischen dem ersten und dem zweiten Ende (21, 22) des Gehäuses (20), wobei jede Membranlage (1600) ein erstes Ende (1601) und ein zweites Ende (1602) umfasst, wobei das zweite Ende (1602) von dem ersten Ende (1601) in der ersten Richtung (1650) beabstandet ist, wobei jede Membranlage (1600) eine erste und eine zweite Seite (1603, 1604) umfasst, die sich zwischen dem ersten und dem zweiten Ende (1601, 1602) erstrecken, wobei die erste Seite (1603) von der zweiten Seite (1604) in einer zweiten Richtung beabstandet ist, wobei die zweite Richtung quer zur ersten Richtung (1650) verläuft, wobei jede Membranlage (1600) eine erste Hauptfläche und eine zweite Hauptfläche umfasst, wobei die zweite Hauptfläche der ersten Hauptfläche gegenüberliegt, wobei jede Membranlage konfiguriert ist, um das Zufuhrfluid in das Restfluid und das Permeatfluid zu trennen,

wobei das Membranmodul (1, 3) so konfiguriert ist, dass das Zufuhrfluid und das Restfluid entlang der ersten Hauptfläche jeder Membranlage (1600) in die erste Richtung (1650) fließen, aber nicht entlang der zweiten Hauptfläche jeder Membranlage (1600) fließen, und das Permeatfluid entlang der zweiten Hauptfläche jeder Membranlage (1600) fließt, aber nicht entlang der ersten Hauptfläche jeder Membranlage (1600) fließt;

wobei das Membranmodul (1, 3) ferner umfasst:

einen Einlass (25) am ersten Ende (21) des Gehäuses (20), wobei der Einlass (25) in Fluidverbindung mit dem ersten Ende (1601) der ersten Hauptfläche jeder Membranlage (1600) steht und konfiguriert ist, um das Zufuhrfluid so aufzunehmen, dass es entlang der ersten Hauptfläche jeder Membranlage (1600) fließt;

einen Auslass (26) am zweiten Ende (22) des Gehäuses (20), wobei der Auslass (26) in Fluidverbindung mit dem zweiten Ende (1602) der ersten Hauptfläche jeder Membranlage (1600) steht und konfiguriert ist, um das von dem Zufuhrfluid abgetrennte Restfluid aufzunehmen und auszugeben;

eine Leitung (1609) benachbart zu einem Permeatabschnitt (1608) entlang der ersten Seite (1603) der zweiten Hauptfläche der Membranlage (1600), wobei der Permeatabschnitt (1608) dazu dient, Permeatfluid in die Leitung (1609) gelangen zu lassen, und die Leitung (1609) konfiguriert ist, um das von dem Zufuhrfluid abgetrennte Permeatfluid aufzunehmen und auszugeben;

wobei mindestens eine der ein oder mehreren Membranlage(n) (1600) einen ersten Abschnitt (1605) und einen zweiten Abschnitt (1606) umfasst, so dass die Trennung des Zufuhrfluids über den ersten Abschnitt (1605) einen ersten Teil des Permeatfluids erzeugt und die Trennung über den zweiten Abschnitt (1606) einen zweiten Teil des Permeatfluids erzeugt,

wobei der zweite Abschnitt (1606) der Membranlage (1600) eine größere Permeanz für die Hauptkomponente als der erste Abschnitt (1605) aufweist, so dass der zweite Teil des Permeatfluids eine höhere Konzentration der Hauptkomponente aufweist als der erste Teil des Permeatfluids;

wobei die mindestens eine der ein oder mehreren Membranlage(n) (1600) einen dritten Abschnitt (1610) umfasst, der konfiguriert ist, um den Permeatfluss in Richtung des Permeatabschnitts (1608) zu lenken, wobei der dritte Abschnitt (1610):

sich entlang der zweiten Hauptfläche der ein oder mehreren Membranlagen (1600) erstreckt;

gegen den Permeatabschnitt (1608) in der ersten Richtung (1650) so versetzt ist, dass der dritte Abschnitt (1610) näher an dem zweiten Ende (1602) liegt als der Permeatabschnitt (1608);

eine im Vergleich zum ersten Abschnitt (1605) verringerte Permeanz für die Hauptkomponente aufweist; und

sich entlang der ersten Seite (1603) der einen oder mehreren Membranlagen (1600) erstreckt;

wobei der zweite Abschnitt (1606) in Fluidverbindung mit dem entlang der ersten Hauptfläche der Membranlage (1600) fließenden Zufuhrfluid steht und in der ersten Richtung (1650) gegen den Permeatabschnitt (1608) der Membranlage (1600) versetzt ist, so dass er näher an dem zweiten Ende (1602) liegt als der Permeatabschnitt (1608), wodurch der zweite Teil des Permeatfluids veranlasst wird, in Richtung des ersten Endes (1601) zu fließen, so dass sich der zweite Teil des Permeatfluids mit dem ersten Teil des Permeatfluids vermischt, wodurch die Konzentration der Nebenkomponente im ersten Teil des Permeatfluids verringert wird.

2. Membranmodul (1, 3) nach Anspruch 1, bei dem die Leitung (1609) an dem Permeatabschnitt (1608) ausgerichtet ist.

3. Membranmodul (1) nach Anspruch 1 oder Anspruch 2, bei dem (i) das Modul (1) ferner eine zweite Leitung (1609') umfasst und jede Membran (1600) einen zweiten Permeatabschnitt (1608') umfasst, wobei sich der zweite Permeatabschnitt (1608') auf der zweiten Seite (1604) befindet, wobei der zweite Permeatabschnitt (1608') mit der zweiten Leitung (1609') fluidisch verbunden ist, wobei die zweite Leitung (1609') konfiguriert ist, um das von dem Zufuhrfluid abgetrennte Permeatfluid aufzunehmen und auszugeben; und/oder (ii) das Membranmodul (1) ein Platten-Rahmen-Modul (1) ist.

4. Membranmodul (3) nach Anspruch 1 oder Anspruch 2, wobei das Gegenstrom-Membranmodul (3) spiralförmig gewunden ist,

wobei die Leitung (1709) ein zentrales Rohr (1709) ist, das sich in der ersten Richtung (1750) erstreckt, wobei die ein oder mehreren Membranlagen (1700) um das zentrale Rohr (1709) gewickelt sind, um eine Spirale senkrecht zur ersten Richtung (1750) zu definieren, so dass die erste Seite (1703) der ein oder mehreren Membranlagen (1700) näher am zentralen Rohr (1709) liegt als die zweite Seite (1704), wobei das zentrale Rohr (1709) eine zylindrische Oberfläche (1770) und erste und zweite Enden (1771, 1772) umfasst, die dazwischen ein Lumen definieren, wobei das zentrale Rohr (1709) eine oder mehrere Öffnung(en) (1773) in der zylindrischen Oberfläche (1770) umfasst, wobei die ein oder mehreren Öffnung(en) (1773) konfiguriert sind, um das von dem Zufuhrfluid abgetrennte Permeatfluid aufzunehmen, wobei die ein oder mehreren Öffnungen (1773) an den Permeatabschnitt (1708) der Membran (1700) angrenzen, wobei die ein oder mehreren Öffnung(en) (1773) in der ersten Richtung (1750) gegen den zweiten Abschnitt (1706) der Membranlage (1700) so versetzt sind, dass die ein oder mehreren Öffnung(en) (1773) näher an dem ersten Ende (1701) liegen als der zweite Abschnitt (1706), wobei das zentrale Rohr (1709) ferner einen Auslass (1774) umfasst, der konfiguriert ist, um das durch die ein oder mehreren Öffnung(en) (1703) aufgenommene Permeatfluid auszugeben, wobei sich der Auslass (1774) in dem ersten oder dem zweiten Ende (1771, 1772) des zentralen Rohrs (1709) befindet, optional, wobei die ein oder mehreren Öffnung(en) (1773) in der ersten Richtung (1750) voneinander beabstandet sind.

5. Membranmodul (1, 3) nach einem der vorhergehenden Ansprüche, bei dem sich der zweite Abschnitt (1606) der Membranlage (1600) entlang einer Außenkante der einen oder mehreren Membranlagen (1600) erstreckt;

optional wobei (i) der zweite Abschnitt (1606) sich entlang mindestens eines Abschnitts der zweiten Seite (1602) erstreckt, wobei der zweite Abschnitt (1606) mit dem Permeatabschnitt (1608) in der ersten Richtung (1650) nicht überlappt, und vorzugsweise der zweite Abschnitt (1606) sich entlang der ersten Richtung (1650) erstreckt; oder (ii) wobei der zweite Abschnitt (1606) sich entlang mindestens eines Abschnitts des zweiten Endes (1602) erstreckt, vorzugsweise wobei der zweite Abschnitt (1606) sich in der ersten Richtung (1650) erstreckt.

6. Membranmodul (1, 3) nach einem der vorhergehenden Ansprüche, bei dem (i) der Permeatabschnitt (1608) sich entlang der ersten Seite (1603) erstreckt; und/oder bei dem (ii) der zweite Abschnitt (1606) sich in der zweiten Richtung und/oder entlang der Kante des zweiten Endes (1602) der ein oder mehreren Membranlage(n) (1600) erstreckt.

7. Membranmodul (1, 3) nach einem der vorhergehenden Ansprüche, bei dem der dritte Abschnitt (1610) für die Hauptkomponente und die Nebenkomponente im Wesentlichen undurchlässig ist.

8. Membranmodul (1, 3) nach Anspruch 7, das ferner einen weiteren dritten Abschnitt (1610) umfasst, wobei der weitere dritte Abschnitt (1610):

gegen den Permeatabschnitt (1608) in der ersten Richtung (1650) so versetzt ist, dass der weitere dritte Abschnitt (1610) näher am zweiten Ende (1602) liegt als der Permeatabschnitt (1608); eine im Vergleich zum ersten Abschnitt (1605) verringerte Permeanz für die Hauptkomponente aufweist; und sich entlang der zweiten Seite (1604) der Membran (1600) erstreckt.

9. Membranmodul (1, 3) nach einem der vorhergehenden Ansprüche, wobei das Modul ferner umfasst:

einen oder mehrere Zufuhr-Abstandshalter (1740), die konfiguriert sind, um die ein oder mehreren Membranlagen (1700) voneinander zu beabstandet zu halten, wobei jeder Zufuhr-Abstandshalter (1740) dazu dient, einen Fluidweg für den Fluss von Zufuhrfluid und Restfluid zum Auslass (26) zu definieren; und einen oder mehrere Permeat-Abstandshalter (1760), die konfiguriert sind, um die ein oder mehreren Membranlagen (1700) voneinander beabstandet zu halten, wobei jeder Permeat-Abstandshalter (1760) dazu dient, einen Fluidweg für den Fluss von Permeatfluid zu der Leitung (1709) zu definieren.

10. Membranmodul (1, 3) nach Anspruch 9, bei dem (i) eine erste Membranlage (1700) der ein oder mehreren Membranlagen so angeordnet ist, dass ein Zufuhr-Abstandshalter (1740) an die erste Hauptfläche der ersten Membranlage angrenzt und ein Permeat-Abstandshalter (1760) an die zweite Hauptfläche der ersten Membranlage angrenzt; und/oder (ii) wobei die Membranlagen (1700), die ein oder mehreren Zufuhr-Abstandshalter (1740) und die ein oder mehreren Permeat-Abstandshalter (1760) in einer gestapelten Konfiguration angeordnet sind, wobei jeder Raum zwischen benachbarten Membranlagen (1700) entweder durch einen Zufuhr-Abstandshalter (1740) oder einen Permeat-Abstandshalter (1760) definiert ist, wobei die Membranlagen (1700) in abwechselnden Orientierungen vorliegen, so dass die erste Hauptfläche jeder Membranlage (1700) in Kontakt mit einem Zufuhr-Abstandshalter (1740) ist und die zweite Hauptfläche jeder Membranlage (1700) in Kontakt mit einem Permeat-Abstandshalter (1760) ist.

11. Membranmodul (1, 3) nach Anspruch 9 oder Anspruch 10, bei dem (i) benachbarte Membranlagen (1700), die durch einen Zufuhr-Abstandshalter (1740) voneinander beabstandet sind, entlang der ersten und zweiten Seiten (1703, 1704) ihrer ersten Hauptfläche abgedichtet sind, um den Fluidweg für den Fluss von Zufuhrfluid und Restfluid entlang der ersten Hauptflächen fluiddicht abzudichten, wobei benachbarte Membranlagen (1700), die durch einen Permeat-Abstandshalter (1760) voneinander beabstandet sind, entlang ihrer ersten und zweiten Enden (1701, 1702) ihrer zweiten Hauptfläche abgedichtet sind, um den Fluidweg für das Permeatfluid entlang der zweiten Hauptflächen fluidisch abzudichten, wobei vorzugsweise die durch einen Permeat-Abstandshalter (1760) voneinander beabstandeten benachbarten Membranlagen (1700) auch entlang der zweiten Seiten (1704) ihrer zweiten Hauptfläche abgedichtet sind; und/oder (ii) bei dem jeder Zufuhr-Abstandshalter (1740) konfiguriert ist, um den Fluidstrom in der ersten Richtung (1750) zu leiten, und jeder Permeat-Abstandshalter (1760) konfiguriert ist, um den Fluidstrom in der zweiten Richtung zu leiten.

12. Membranmodul (1, 3) nach einem der vorhergehenden Ansprüche, bei dem (i) die Fläche des zweiten Abschnitts (1606) weniger als 20 %, vorzugsweise weniger als 15 %, weiter bevorzugt weniger als 10 % und am meisten bevorzugt weniger als 6 % der Gesamtfläche der Membranfolie (1600) beträgt; und/oder (ii) die Permeanz des zweiten Abschnitts (1606) für die Hauptkomponente mehr als das Zweifache, vorzugsweise mindestens das Zehnfache der Permeanz des ersten Abschnitts (1605) für die Hauptkomponente beträgt.

13. Membranmodul (1, 3) nach Anspruch 1, bei dem der zweite Abschnitt (1606) einen Teil der zweiten Hauptfläche bildet; und/oder bei dem der zweite Abschnitt (1606) einen Teil der ersten Hauptfläche bildet.

14. Membranmodul (1, 3) nach einem der vorhergehenden Ansprüche, das so konfiguriert ist, dass durch den zweiten Teil des Permeatfluids ein Gegenstrom-Spüleffekt im Strömungsweg für das Permeatfluid erzeugt wird.

15. Verfahren zur Herstellung der Membranlagen (1600) des Membranmoduls (1, 3) nach einem der Ansprüche 1 bis 14, wobei das Verfahren umfasst:

Bereitstellen einer Rolle von Vorläuferlagen (901);
Beschichten eines ersten Bereichs (907) der Rolle von Vorläuferlagen (901) mit einer ersten Beschichtungslösung und Beschichten eines zweiten Bereichs (908) der Rolle von Vorläuferlagen (901) mit einer zweiten Beschichtungslösung, um die Rolle von Membranlagen zu bilden,
Zerlegen der ein oder mehreren Rolle(n) von Membranlagen in separate Membranlagen (1600), wobei der erste Abschnitt (1605) jeder Membranlage (1600) durch den ersten Bereich (907) der Rolle von Membranlagen (901) gebildet wird und der zweite Abschnitt (1606) jeder Membranlage (1600) durch den zweiten Bereich (908) der Rolle von Membranlagen (901) gebildet wird, wobei der zweite Abschnitt (1606) jeder Membranlage (1600) eine höhere Permeanz für die Hauptkomponente als der erste Abschnitt (1605) aufweist; und
Bilden des dritten Abschnitts (1610) auf der zweiten Hauptfläche der ein oder mehreren Membranlagen (1600).

16. Verfahren nach Anspruch 15, bei dem (i) der erste Bereich (907) und der zweite Bereich (908) aneinander angrenzen, wobei vorzugsweise der zweite Bereich (908) zwischen zwei ersten Bereichen (907) so positioniert ist, dass in jeder Membranlage (1600) der zweite Abschnitt (1606) als Streifen ausgebildet ist und die ersten Abschnitte (1605) auf beiden Seiten des zweiten Abschnitts (1606) vorgesehen sind; und/oder bei dem (ii) der Schritt des Beschichtens des ersten Bereichs (907) und der Schritt des Beschichtens des zweiten Bereichs (906) gleichzeitig durchgeführt werden.

17. Verfahren nach Anspruch 15 oder 16, wobei das Verfahren ferner das Falten jeder Membranlage (1200) um einen Zufuhr-Abstandshalter (1240) umfasst, so dass jede Membranlage (1200) ein Paar von Membranlagen (1200) bildet; oder wobei das Verfahren ferner das Zusammensiegeln von zwei Membranlagen (1200) entlang ihrer ersten Seite (1703) und das Positionieren eines Zufuhr-Abstandshalters (1740) dazwischen umfasst.

18. Verfahren nach einem der Ansprüche 15 bis 17, bei dem der Schritt des Beschichtens durch Inkontaktbringen der Rolle der Membranlagen (901) mit ersten und zweiten Lösungen in einem Beschichtungsbehälter (906) durchgeführt wird, wobei der Beschichtungsbehälter (906) erste und zweite Abschnitte (905, 904) aufweist, die durch Trennelemente (910, 911) voneinander fluidisch getrennt sind, wobei der erste Abschnitt (905) die erste Beschichtungslösung und der zweite Abschnitt (904) die zweite Beschichtungslösung enthält; optional, bei dem (i) der zweite Abschnitt des Beschichtungsbehälters (906) zwischen zwei ersten Abschnitten (905) des Beschichtungsbehälters (906) positioniert ist und/oder (ii) das Verfahren ferner das Bewegen der Position der Trennelemente (910, 911) umfasst, um die Position und Größe des zweiten Abschnitts (1606) anzupassen.

19. Verfahren zur Verwendung eines Gegenstrom-Membranmoduls (1, 3) zum Abtrennen einer Nebenkomponente aus einem Zufuhrstrom, der eine Hauptkomponente und eine Nebenkomponente umfasst, wobei das Restfluid eine geringere Konzentration der Nebenkomponente als das Zufuhrfluid aufweist und das Permeatfluid eine höhere Konzentration der Nebenkomponente als das Zufuhrfluid aufweist, wobei das Modul (1, 3) umfasst:

ein Gehäuse (20) mit einem ersten Ende (21) und einem zweiten Ende (22), wobei das zweite Ende (22) in einer ersten Richtung (1650) von dem ersten Ende (21) beabstandet ist,
eine oder mehrere Membranlage(n) (1600), die sich zwischen dem ersten und dem zweiten Ende (21, 22) des Gehäuses (20) erstreckt bzw. erstrecken, wobei jede Membranlage (1600) ein erstes Ende (1601) und ein zweites Ende (1602) umfasst, wobei das zweite Ende (1602) in der ersten Richtung (1650) von dem ersten Ende (1601) beabstandet ist, wobei jede Membranlage (1600) eine erste und eine zweite Seite (1603, 1604) umfasst, die sich zwischen dem ersten und dem zweiten Ende (1601, 1602) erstrecken, wobei die erste Seite (1603) von der zweiten Seite (1604) in einer zweiten Richtung beabstandet ist, wobei die zweite Richtung quer zur ersten Richtung (1650) verläuft, wobei jede Membranlage (1600) eine erste Hauptfläche und eine zweite Hauptfläche umfasst, wobei die zweite Hauptfläche der ersten Hauptfläche gegenüberliegt,
einen Einlass (25) am ersten Ende (21) des Gehäuses (20), wobei der Einlass (25) in Fluidverbindung mit dem ersten Ende (1601) der ersten Hauptfläche jeder Membranlage (1600) steht;
einen Auslass (26) am zweiten Ende (22) des Gehäuses (20), wobei der Auslass (26) in Fluidverbindung mit dem zweiten Ende (1602) der ersten Hauptfläche jeder Membranlage (1600) steht; und
eine Leitung (1609), benachbart zu einem Permeatabschnitt (1608) entlang der ersten Seite der zweiten Hauptfläche der Membranlage (1600);
wobei mindestens eine der ein oder mehreren Membranlage(n) (1600) einen ersten Abschnitt (1605) und einen zweiten Abschnitt (1606) umfasst;
wobei die mindestens eine der ein oder mehreren Membranlage(n) (1600) einen dritten Abschnitt (1610) umfasst, der:

sich entlang der zweiten Hauptfläche der ein oder mehreren Membranlagen (1600) erstreckt;
gegen den Permeatabschnitt (1608) in der ersten Richtung (1650) versetzt ist, so dass der dritte Abschnitt (1610) näher am zweiten Ende (1602) liegt als der Permeatabschnitt (1608);
eine geringere Permeanz für die Hauptkomponente im Vergleich zum ersten Abschnitt (1605) aufweist; und
sich entlang der ersten Seite (1603) der Membran (1600) erstreckt;

wobei das Verfahren umfasst:

Zuführen eines Zufuhrfluids, das die Hauptkomponente und die Nebenkomponente umfasst, über den Einlass (25) zu der ersten Hauptfläche jeder Membranlage (1600), so dass es entlang der ersten Hauptfläche jeder Membranlage (1600) in der ersten Richtung (1650) fließt;
Trennen des Zufuhrfluids über jede Membranlage (1600) in das Permeatfluid und das Restfluid, so dass das Restfluid entlang der ersten Hauptfläche in der ersten Richtung (1650) zum Auslass (26) fließt und das Permeatfluid entlang der zweiten Hauptfläche in der zweiten Richtung zum Permeatabschnitt (1608) und dann in die Leitung (1609) fließt;
wobei das Membranmodul (1, 3) so konfiguriert ist, dass das Zufuhrfluid und das Restfluid entlang der ersten Hauptfläche jeder Membranlage (1600) in der ersten Richtung (1650) fließen, aber nicht entlang der zweiten Hauptfläche jeder Membranlage (1600) fließen, und das Permeatfluid entlang der zweiten Hauptfläche jeder Membranlage (1600) fließt, aber nicht entlang der ersten Hauptfläche jeder Membranlage (1600) fließt;
wobei der Schritt des Trennens das Trennen des Zufuhrfluids über den ersten Abschnitt (1605) der Membranlage (1600), um einen ersten Teil des Permeatfluids zu erzeugen, und das Trennen des Zufuhrfluids über den zweiten Abschnitt (1606) der Membranlage (1600), um einen zweiten Teil des Permeatfluids zu erzeugen, umfasst, wobei der zweite Abschnitt (1606) der Membranlage (1600) eine größere Permeanz für die Hauptkomponente aufweist als der erste Abschnitt (1605), so dass der zweite Teil des Permeatfluids eine höhere Konzentration der Hauptkomponente aufweist als der erste Teil des Permeatfluids;

wobei der Fluss des Permeats durch den dritten Abschnitt (1610) in Richtung des Permeatabschnitts (1608) gelenkt wird;

wobei der zweite Abschnitt (1606) in Fluidverbindung mit dem Zufuhrfluid steht, das entlang der ersten Hauptfläche der Membranlage (1600) fließt, und in der ersten Richtung (1650) gegen den Permeatabschnitt (1608) der Membranlage (1600) versetzt ist, so dass er näher an dem zweiten Ende (1602) liegt als der Permeatabschnitt (1608), wodurch der zweite Teil des Permeatfluids veranlasst wird, in Richtung des ersten Endes (1601) zu fließen, so dass sich der zweite Teil des Permeatfluids mit dem ersten Teil des Permeatfluids vermischt, wodurch die Konzentration der Nebenkomponente im ersten Teil des Permeatfluids verringert wird;

wobei das Verfahren ferner Ausgeben des Restfluids aus dem Modul (1, 3) über den Auslass (26) und Ausgeben des Permeatfluids aus dem Modul (1, 3) über die Leitung (1609) umfasst.

20. Verfahren nach Anspruch 19, bei dem die Nebenkomponente Kohlendioxid ist und die Hauptkomponente Methan oder Stickstoff ist.

21. Verfahren nach Anspruch 19, bei dem das Gegenstrom-Membranmodul (1, 2, 3) für die Pervaporation verwendet wird, und:

die Nebenkomponente Wasser ist und die Hauptkomponente Ethanol ist; oder
die Nebenkomponente Aromaten sind und die Hauptkomponente aliphatische Kohlenwasserstoffe sind.

## Revendications

1. Module de membrane à contre-courant (1, 3) configuré pour séparer un fluide d'alimentation comprenant un composant secondaire et un composant principal en un fluide de perméat et en un fluide résiduel, dans lequel le fluide résiduel présente une concentration plus faible du composant secondaire que le fluide d'alimentation et le fluide de perméat présente une concentration plus élevée du composant secondaire que le fluide d'alimentation, le module comprenant :

un boîtier (20) présentant une première extrémité (21) et une seconde extrémité (22), dans lequel la seconde extrémité (22) est espacée de la première extrémité (21) le long d'une première direction (1650) ;
une ou plusieurs feuilles de membrane (1600) entre les première et seconde extrémités (12, 22) du boîtier (20), dans lequel chaque feuille de membrane (1600) comprend une première extrémité (1601) et une seconde extrémité (1602), dans lequel la seconde extrémité (1602) est espacée de la première extrémité (1601) le long de la première direction (1650), dans lequel chaque feuille de membrane (1600) comprend des premier et second côtés (1603, 1604) s'étendant entre les première et seconde extrémités (1601, 1602), dans lequel le premier côté (1603) est espacé du second côté (1604) le long d'une seconde direction, dans lequel la seconde direction est transversale à la première direction (1650), dans lequel chaque feuille de membrane (1600) comprend une première surface principale et une seconde surface principale, dans lequel la seconde surface principale est opposée à la première surface principale, dans lequel chaque feuille de membrane (1600) est configurée pour séparer le fluide d'alimentation en le fluide résiduel et le fluide de perméat,
dans lequel le module de membrane (1, 3) est configuré de telle sorte que le fluide d'alimentation et le fluide résiduel s'écoulent le long de la première surface principale de chaque feuille de membrane (1600) dans la première direction (1650) mais ne s'écoulent pas le long de la seconde surface principale de chaque feuille de membrane (1600), et le fluide de perméat s'écoule le long de la seconde surface principale de chaque feuille de membrane (1600) mais ne s'écoule pas le long de la première surface principale de chaque feuille de membrane (1600) ;
le module de membrane (1, 3) comprenant en outre :

une entrée (25) au niveau de la première extrémité (21) du boîtier (20), dans lequel l'entrée (25) est en communication fluidique avec la première extrémité (1601) de la première surface principale de chaque feuille de membrane (1600) et est configurée pour recevoir le fluide d'alimentation de sorte qu'il s'écoule le long de la première surface principale de chaque feuille de membrane (1600) ;

une sortie (26) au niveau de la seconde extrémité (22) du boîtier, dans lequel la sortie (26) est en communication fluidique avec la seconde extrémité (1602) de la première surface principale de chaque feuille de membrane (1600) et est configurée pour recevoir et délivrer en sortie le fluide résiduel séparé du fluide d'alimentation ;

un conduit (1609) adjacent à une section de perméat (1608) le long du premier côté (1603) de la seconde surface principale de la feuille de membrane (1600), dans lequel la section de perméat (1608) est destinée à permettre au fluide de perméat de passer dans le conduit (1609), dans lequel le conduit (1609) est configuré pour recevoir et délivrer en sortie le fluide de perméat séparé du fluide d'alimentation ;

dans lequel au moins une des une ou plusieurs feuilles de membrane (1600) comprend une première partie (1605) et une deuxième partie (1606) de telle sorte que la séparation du fluide d'alimentation à travers la première partie (1605) génère une première partie du fluide de perméat et la séparation à travers la seconde partie (1606) génère une seconde partie du fluide de perméat,

dans lequel la deuxième partie (1606) de la feuille de membrane (1600) présente une perméance plus grande pour le composant principal que la première partie (1605) de telle sorte que la seconde partie du fluide de perméat présente une concentration plus élevée du composant principal que la première partie du fluide de perméat ;

dans lequel la au moins une des une ou plusieurs feuilles de membrane (1600) comprend une troisième partie (1610) configurée pour diriger un écoulement de perméat vers la section de perméat (1608), dans lequel la troisième partie (1610) :

s'étend le long de la seconde surface principale des une ou plusieurs feuilles de membrane (1600) ;
est décalée par rapport à la section de perméat (1608) le long de la première direction (1650) de telle sorte que la troisième partie (1610) est plus proche de la seconde extrémité (1602) que la section de perméat (1608) ; présente une perméance réduite pour le composant principal par comparaison à la première partie (1605) ; et
s'étend le long du premier côté (1603) des une ou plusieurs feuilles de membrane (1600) ;

dans lequel la deuxième partie (1606) est en communication fluidique avec le fluide d'alimentation s'écoulant le long de la première surface principale de la feuille de membrane (1600) et est décalée dans la première direction (1650) par rapport à la section de perméat (1608) de la feuille de membrane (1600) de telle sorte qu'elle est plus proche de la seconde extrémité (1602) que la section de perméat (1608), en amenant ainsi la seconde partie du fluide de perméat à s'écouler vers la première extrémité (1601) de telle sorte que la seconde partie du fluide de perméat se mélange avec la première partie du fluide de perméat, en réduisant ainsi la concentration du composant secondaire dans la première partie du fluide de perméat.

2. Module de membrane (1, 3) selon la revendication 1, dans lequel le conduit (1609) est aligné avec la section de perméat (1608).

3. Module de membrane (1) selon la revendication 1 ou la revendication 2, dans lequel (i) le module (1) comprend en outre un second conduit (1609') et chaque membrane (1600) comprend une seconde section de perméat (1608'), dans lequel la seconde section de perméat (1608') est sur le second côté (1604), dans lequel la seconde section de perméat (1608') est reliée de manière fluidique au second conduit (1609'), dans lequel le second conduit (1609') est configuré pour recevoir et délivrer en sortie le fluide de perméat séparé du fluide d'alimentation ; et/ou (ii) dans lequel le module de membrane (1) est un module de plaque et de cadre (1).

4. Module de membrane (3) selon la revendication 1 ou la revendication 2, dans lequel le module de membrane à contre-courant (3) est enroulé en spirale,

dans lequel le conduit (1709) est un tube central (1709) s'étendant le long de la première direction (1750),
dans lequel les une ou plusieurs feuilles de membrane (1700) sont enroulées autour du tube central (1709) de manière à définir une spirale perpendiculaire à la première direction (1750), de telle sorte que le premier côté (1703) des une ou plusieurs feuilles de membrane (1700) est plus proche du tube central (1709) que le second côté (1704),
dans lequel le tube central (1709) comprend une surface cylindrique (1770) et des première et seconde extrémités terminales (1771, 1772) définissant une lumière entre celles-ci,
dans lequel le tube central (1709) comprend une ou plusieurs ouvertures (1773) dans la surface cylindrique (1770), dans lequel les une ou plusieurs ouvertures (1773) sont configurées pour recevoir le fluide de perméat séparé du fluide d'alimentation, dans lequel les une ou plusieurs ouvertures (1773) sont adjacentes à la section de perméat (1708) de la membrane (1700), dans lequel les une ou plusieurs ouvertures (1773) sont décalées dans la première direction (1750) par rapport à la deuxième partie (1706) de la feuille de membrane (1700) de sorte que les une ou plusieurs ouvertures (1773) sont plus proches de la première extrémité (1701) que de la deuxième partie (1706),

dans lequel le tube central (1709) comprend en outre une sortie (1774) configurée pour délivrer en sortie le fluide de perméat reçu par les une ou plusieurs ouvertures (1703), dans lequel la sortie (1774) se trouve dans les première ou seconde extrémités terminales (1771, 1772) du tube central (1709),

facultativement dans lequel les une ou plusieurs ouvertures (1773) sont espacées les unes des autres le long de la première direction (1750).

5.  Module de membrane (1, 3) selon l'une quelconque des revendications précédentes, dans lequel la deuxième partie (1606) de la feuille de membrane (1600) s'étend le long d'un bord extérieur des une ou plusieurs feuilles de membrane (1600) ;

facultativement dans lequel (i) la deuxième partie (1606) s'étend le long d'au moins une partie du second côté (1602), dans lequel la deuxième partie (1606) ne chevauche pas la section de perméat (1608) dans la première direction (1650), de préférence dans lequel la deuxième partie (1606) s'étend le long de la première direction (1650) ; ou (ii)

dans lequel la deuxième partie (1606) s'étend le long d'au moins une partie de la seconde extrémité (1602), de préférence dans lequel la deuxième partie (1606) s'étend le long de la première direction (1650).

6.  Module de membrane (1, 3) selon l'une quelconque des revendications précédentes, dans lequel (i) la section de perméat (1608) s'étend le long du premier côté (1603) ; et/ou dans lequel (ii) la deuxième partie (1606) s'étend dans la seconde direction et/ou le long du bord de la seconde extrémité (1602) des une ou plusieurs feuilles de membrane (1600).

7.  Module de membrane (1, 3) selon l'une quelconque des revendications précédentes, dans lequel la troisième partie (1610) est sensiblement imperméable au composant principal et au composant secondaire.

8.  Module de membrane (1, 3) selon la revendication 7, comprenant en outre une troisième partie supplémentaire (1610), dans lequel la troisième partie supplémentaire (1610) :

est décalée par rapport à la section de perméat (1608) le long de la première direction (1650) de telle sorte que la troisième partie supplémentaire (1610) est plus proche de la seconde extrémité (1602) que la section de perméat (1608)

présente une perméance réduite pour le composant principal par rapport à la première partie (1605) ; et

s'étend le long du second côté (1604) de la membrane (1600).

9.  Module de membrane (1, 3) selon l'une quelconque des revendications précédentes, dans lequel le module (1, 3) comprend en outre :

une ou plusieurs espaceurs d'alimentation (1740) configurés pour espacer les une ou plusieurs feuilles de membrane (1700), chaque espaceur d'alimentation (1740) étant destiné à définir un trajet de fluide pour l'écoulement de fluide d'alimentation et de fluide résiduel vers la sortie ; et

un ou plusieurs espaceurs de perméat (1760) configurés pour espacer les une ou plusieurs feuilles de membrane (1700), dans lequel chaque espaceur de perméat (1760) est destiné à définir un trajet de fluide pour l'écoulement du fluide de perméat vers le conduit (1709).

10. Module de membrane (1, 3) selon la revendication 9, dans lequel (i) une première feuille de membrane des une ou plusieurs feuilles de membrane (1700) est agencée de telle sorte qu'un espaceur d'alimentation (1740) est adjacent à la première surface principale de la première feuille de membrane et un espaceur de perméat (1760) est adjacent à la seconde surface principale de la première feuille de membrane ; et/ou (ii) les feuilles de membrane (1700), les un ou plusieurs espaceurs d'alimentation (1740) et les un ou plusieurs espaceurs de perméat (1760) sont agencés dans une configuration empilée, dans lequel chaque espace entre des feuilles de membrane adjacentes (1700) est défini soit par un espaceur d'alimentation (1740) soit par un espaceur de perméat (1760), dans lequel les feuilles de membrane (1700) sont dans des orientations alternées de telle sorte que la première surface principale de chaque feuille de membrane (1700) est en contact avec un espaceur d'alimentation (1740) et la seconde surface principale de chaque feuille de membrane (1700) est en contact avec un espaceur de perméat (1760).

11. Module de membrane (1, 3) selon la revendication 9 ou la revendication 10, dans lequel (i) des feuilles de membrane adjacentes (1700) espacées par un espaceur d'alimentation (1740) sont scellées le long des premier et second côtés (1703, 1704) de leur première surface principale pour sceller de manière fluidique le trajet de fluide pour l'écoulement de fluide d'alimentation et de fluide résiduel à travers les premières surfaces principales, dans lequel des feuilles de membrane adjacentes (1700) espacées par un espaceur de perméat (1760) sont scellées le long de leurs première et seconde extrémités (1701, 1702) de leur seconde surface principale pour sceller de manière fluidique le trajet de fluide pour le fluide de perméat à travers les secondes surfaces principales, de préférence dans lequel les feuilles de membrane adjacentes (1700) espacées par un espaceur de perméat (1760) sont également scellées le long des seconds côtés (1704) de leur seconde surface principale ; et/ou (ii) chaque espaceur d'alimentation (1740) est configuré pour diriger l'écoulement de fluide le long de la première direction (1750) et chaque espaceur de perméat (1760) est configuré pour diriger l'écoulement de fluide le long de la seconde direction.

12. Module de membrane (1, 3) selon l'une quelconque des revendications précédentes, dans lequel (i) l'aire de la deuxième partie (1606) est inférieure à 20 %, de préférence inférieure à 15 %, de manière plus préférée inférieure à 10 %, de la manière la plus préférée inférieure à 6 % de l'aire totale de la feuille de membrane (1600) ; et/ou (ii) la perméance de la deuxième partie (1606) pour le composant principal est supérieure à deux fois, de préférence au moins dix fois la perméance de la première partie (1605) pour le composant principal.

13. Module de membrane (1, 3) selon la revendication 1, dans lequel la deuxième partie (1606) forme une partie de la seconde surface principale ; et/ou dans lequel la deuxième partie (1606) forme une partie de la première surface principale.

14. Module de membrane (1, 3) selon l'une quelconque des revendications précédentes, configuré de telle sorte qu'un effet de balayage à contre-courant est généré dans le trajet d'écoulement pour le fluide de perméat par la seconde partie du fluide de perméat.

15. Procédé de fabrication des feuilles de membrane (1600) du module de membrane (1, 3) selon l'une quelconque des revendications 1 à 14, le procédé comprenant les étapes consistant à :

fournir un rouleau (901) de feuilles précurseurs ;
revêtir une première aire (907) du rouleau de feuilles précurseurs (901) avec une première solution de revêtement et revêtir une seconde aire (908) du rouleau de feuilles précurseurs (901) avec une seconde solution de revêtement pour former le rouleau de feuilles de membrane ;
séparer les un ou plusieurs rouleaux de feuilles de membrane en feuilles de membrane séparées (1600), dans lequel la première partie (1605) de chaque feuille de membrane est formée par la première aire (907) du rouleau de feuilles de membrane (901) et la deuxième partie (1606) de chaque feuille de membrane (1600) est formée par la seconde aire (908) du rouleau de feuilles de membrane (901), dans lequel la deuxième partie (1606) de chaque feuille de membrane (1600) présente une perméance plus élevée pour le composant principal que la première partie ; et
former la troisième partie (1610) sur la seconde surface principale des une ou plusieurs feuilles de membrane (1600).

16. Procédé selon la revendication 15, dans lequel (i) la première aire (907) et la seconde aire (908) sont adjacentes l'une à l'autre, de préférence dans lequel la seconde aire (908) est positionnée entre deux premières aires (907) de telle sorte que dans chaque feuille de membrane (1600), la deuxième partie (1606) est formée sous la forme d'une bande et les premières parties (1605) sont prévues de chaque côté de la deuxième partie (1606) ; et/ou dans lequel (ii) l'étape de revêtement de la première aire (907) et l'étape de revêtement de la seconde aire (906) sont effectuées simultanément.

17. Procédé selon la revendication 15 ou la revendication 16, dans lequel le procédé comprend en outre un pliage de chaque feuille de membrane (1200) autour d'un espaceur d'alimentation (1240) de telle sorte que chaque feuille de membrane (1200) forme une paire de feuilles de membrane (1200) ; ou dans lequel le procédé comprend en outre un scellement de deux feuilles de membrane (1200) ensemble le long de leur premier côté et un positionnement d'un espaceur d'alimentation entre celles-ci (1240).

18. Procédé selon l'une quelconque des revendications 15 à 17, dans lequel l'étape de revêtement est réalisée en mettant en contact le rouleau de feuilles de membrane (901) avec des première et seconde solutions dans un récipient de revêtement (906), dans lequel le récipient de revêtement (906) présente des première et seconde sections (904, 905) séparées de manière fluidique l'une de l'autre par des séparateurs (910, 911), la première section (905) contenant la première solution de revêtement et la seconde section (904) contenant la seconde solution de revêtement ; facultativement dans lequel (i) la seconde section du récipient de revêtement (906) est positionnée entre deux premières sections (905) du récipient de revêtement (906) et/ou (ii) le procédé comprend en outre un déplacement de la position des séparateurs (910, 911) pour ajuster la position et la taille de la deuxième partie (1606).

19. Procédé d'utilisation d'un module de membrane à contre-courant (1, 3) pour séparer un composant secondaire d'un écoulement d'alimentation comprenant un composant principal et un composant secondaire, dans lequel le fluide résiduel présente une concentration plus faible du composant principal que le fluide d'alimentation, et le fluide de perméat présente une concentration plus élevée du composant secondaire que le fluide d'alimentation, dans lequel le module (1, 3) comprend :

un boîtier (20) présentant une première extrémité (21) et une seconde extrémité (22), dans lequel la seconde extrémité (22) est espacée de la première extrémité (21) le long d'une première direction (1650), une ou plusieurs feuilles de membrane (1600) s'étendant entre les première et seconde extrémités (21, 22) du boîtier (20), dans lequel chaque feuille de membrane (1600) comprend une première extrémité (1601) et une seconde extrémité (1602), dans lequel la seconde extrémité (1602) est espacée de la première extrémité (1601) le long de la première direction (1650), dans lequel chaque feuille de membrane (1600) comprend des premier et second côtés (1603, 1604) s'étendant entre les première et seconde extrémités (1601, 1602), dans lequel le premier côté (1603) est espacé du second côté (1604) le long d'une seconde direction, dans lequel la seconde direction est transversale à la première direction (1650), dans lequel chaque feuille de membrane (1600) comprend une première surface principale et une seconde surface principale, dans lequel la seconde surface principale est opposée à la première surface principale, une entrée (25) au niveau de la première extrémité (21) du boîtier (20), dans lequel l'entrée (25) est en communication fluidique avec la première extrémité (1601) de la première surface principale de chaque feuille de membrane (1600) ; une sortie (26) au niveau de la seconde extrémité (22) du boîtier (20), dans lequel la sortie (26) est en communication fluidique avec la seconde extrémité (1602) de la première surface principale de chaque feuille de membrane (1600) ; et un conduit (1609) adjacent à une section de perméat (1608) le long du premier côté (1603) de la seconde surface principale de la feuille de membrane (1600) ; dans lequel au moins une des une ou plusieurs feuilles de membrane (1600) comprend une première partie (1605) et une deuxième partie (1606) ; dans lequel la au moins une des une ou plusieurs feuilles de membrane (1600) comprend une troisième partie (1610) qui :

s'étend le long de la seconde surface principale des une ou plusieurs feuilles de membrane (1600) ; est décalée par rapport à la section de perméat (1608) le long de la première direction (1650) de telle sorte que la troisième partie (1610) est plus proche de la seconde extrémité (1602) que la section de perméat (1608) présente une perméance réduite pour le composant principal par rapport à la première partie (1605) ; et s'étend le long du premier côté (1603) de la membrane (1600)

le procédé comprenant les étapes consistant à :

délivrer un fluide d'alimentation comprenant le composant principal et le composant secondaire via l'entrée (25) vers la première surface principale de chaque feuille de membrane (1600) de telle sorte qu'il s'écoule le long de la première surface principale de chaque feuille de membrane dans la première direction (1650) ; séparer le fluide d'alimentation à travers chaque feuille de membrane (1600) en le fluide de perméat et le fluide résiduel de telle sorte que le fluide résiduel s'écoule le long de la première surface principale dans la première direction (1650) vers la sortie (26), et le fluide de perméat s'écoule le long de la seconde surface principale vers la section de perméat (1608), puis dans le conduit (1609) ; dans lequel le module de membrane (1, 3) est configuré de telle sorte que le fluide d'alimentation et le fluide résiduel s'écoulent le long de la première surface principale de chaque feuille de membrane (1600) dans la première direction (1650) mais ne s'écoulent pas le long de la seconde surface principale de chaque feuille de membrane (1600), et le fluide de perméat s'écoule le long de la seconde surface principale de chaque feuille de membrane (1600) mais ne s'écoule pas le long de la première surface principale de chaque feuille de membrane (1600) ;

dans lequel l'étape de séparation comprend une séparation du fluide d'alimentation à travers la première partie (1605) de la feuille de membrane (1600) pour générer une première partie du fluide de perméat et une séparation du fluide d'alimentation à travers la deuxième partie (1606) de la feuille de membrane pour générer une seconde partie du fluide de perméat, dans lequel la deuxième partie (1606) de la feuille de membrane présente une perméance plus grande pour le composant principal que la première partie (1605) de telle sorte que la seconde partie du fluide de perméat présente une concentration plus élevée du composant principal que la première partie du fluide de perméat ;

dans lequel l'écoulement de perméat est dirigé vers la section de perméat (1608) par la troisième partie (1610) ;

dans lequel la deuxième partie (1606) est en communication fluidique avec le fluide d'alimentation s'écoulant le long de la première surface principale de la feuille de membrane (1600) et est décalée dans la première direction (1650) par rapport à la section de perméat (1608) de la feuille de membrane (1600) de telle sorte qu'elle est plus proche de la seconde extrémité (1602) que la section de perméat (1608), en amenant ainsi la deuxième partie du fluide de perméat à s'écouler vers la première extrémité (1601) de telle sorte que la seconde partie du fluide de perméat se mélange à la première partie du fluide de perméat, en réduisant ainsi la concentration du composant secondaire dans la première partie du fluide de perméat ;

dans lequel le procédé comprend en outre l'étape consistant à délivrer en sortie le fluide résiduel à partir du module (1, 3) via la sortie (26) et à délivrer en sortie du fluide de perméat à partir du module (1, 3) via le conduit (1609).

20. Procédé selon la revendication 19, dans lequel le composant secondaire est le dioxyde de carbone, et le composant principal est le méthane ou l'azote.

21. Procédé selon la revendication 19, dans lequel le module de membrane à contre-courant (1, 3) est utilisé pour une pervaporation et :

le composant secondaire est de l'eau, et le composant principal est de l'éthanol ; ou le composant secondaire est des aromatiques, et le composant principal est des hydrocarbures aliphatiques.

Counterflow          Crossflow          Coflow

# FIG. 1

Feed ——→ 10% CO₂ 90% N₂ 5 bar

Residue 10% CO₂

Permeate 1 bar

Maximum CO₂ concentration in permeate is 50%

FIG. 2

FIG. 3

(a)

(b)

FIG. 4
Prior art

FIG. 5
Prior art

(a)

10% CO₂ → | 1140m² | → 1% CO₂

↓ 18.9% CO₂

(b)

10% CO₂ → | 723m² | → 1% CO₂

↓ 27.8% CO₂

(c)

10% CO₂ → | 516m² | → 1% CO₂

↓ 27.6% CO₂

10% of residue gas

FIG. 6

(a)

10% $CO_2$ → | 83m$^2$ | → 1% $CO_2$

↓

39.3% $CO_2$

(b)

10% $CO_2$ → | 73.5m$^2$ | → 1% $CO_2$

↓

44.5% $CO_2$

(c)

10% $CO_2$ → | 55m$^2$ | → 1% $CO_2$

↓

37.7% $CO_2$

10% of residue gas

# FIG. 7

(a)

Membrane 1008

Feed
spacer

1002
Feed
flow

1007
Perforated permeate
collection pipe

1006
Reside flow

1009

1005 Permeate spacer

1010

1004 Membrane envelope

(b)

Residue 903

901
Left
permeate

902
Right
permeate

904

904

906
feed

906
feed

(c)

Permeate

Feed

Residue

Hollow Fibers

FIG. 8

**(a)**

**(b)**

Enlarge view of coating tray

# FIG. 9

(a)

(b)

FIG. 10

Protective coating layer (optional) (1104)

Selective layer (1103)

Gutter layer (1102)

Support membrane (1101)

1 μm

FIG. 11

FIG. 12

(a)

1300

1305

1310

1330

1306

(b)

1340

1321

1306

# FIG. 13

FIG. 14

(a)

(b)

FIG. 15

FIG. 16

FIG. 17A

FIG. 17B

FIG. 17C

FIG. 17D

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5096584 A
- US 8496825 B1
- CN 108043228 A
- US 4687578 A
- US 6740140 B
- US 8661648 B
- US 4824443 A
- US 6515725 B
- US 7153343 B
- US 8246718 B
- US 5444540 A
- US 5205842 A
- US 5383956 A

### Non-patent literature cited in the description

- **BAKER, R.W.** Membrane Technology and Applications. John Wiley and Sons, 2012
- **RICHARD BAKER**. Membrane Technology and Applications. John Wiley, 2012
- **HUANG et al.** *Journal of Membrane Science*, 2014, vol. 463 (33)